# EUROPEAN PATENT APPLICATION

(11) **EP 4 811 086 A1**
(43) Date of publication of application: **23.09.2026**
(21) Application number: 26164798.6
(22) Date of filing: 13.03.2026
(51) Int. Cl.: G06F 3/041, G06F 3/044, H10K 59/40

(54) **SENSOR, CONTROLLER AND ELECTRONIC DEVICE COMPRISING THE SAME**

(30) Priority: 17.03.2025 KR 20250033972; 20.02.2026 KR 20260032331
(71) Applicant: Hideep Inc., Seongnam-si, Gyeonggi-do 13493 (KR)
(72) Inventor: KIM, Seyeob, 13493 Gyeonggi-do (KR); KIM, Bumsoo, 13493 Gyeonggi-do (KR); CHO, Young ho, 13493 Gyeonggi-do (KR)
(74) Representative: HGF

(57) **Abstract**

An electronic device according to an embodiment of the present disclosure comprises: a sensor comprising a plurality of first electrode patterns extending in a first direction and a plurality of second electrode patterns extending in a second direction crossing the first direction; and a controller electrically connected to the sensor, and configured to control a touch sensing operation of sensing a touch of an object through the sensor, and a stylus driving operation for driving a stylus pen and/or a stylus sensing operation for sensing the stylus pen, wherein each of the second electrode patterns has an open-loop shape in which one side of a closed loop is opened, and both ends of each second electrode pattern are configured to be respectively electrically connected to different terminals of the controller, and both ends of all of the plurality of second electrode patterns are disposed to face the same direction.

## Description

### BACKGROUND

The present disclosure relates to a sensor, a controller, and an electronic device comprising the same, and more particularly, to an electronic device integrally performing a touch sensing function and a stylus sensing function.

Conventional input devices for smart devices have a structure in which a touch sensor and a stylus sensor are separated into different layers and stacked. This causes the following technical problems.

As the touch sensor is disposed above the display panel and the stylus sensor is disposed below the display panel independently, the overall thickness of the display module increases, which hinders the slimness of the device. In addition, since a separate dedicated sensor layer must be additionally provided to implement the stylus function, there is economic inefficiency in that component costs and process costs increase. Furthermore, to drive the touch sensor and the stylus sensor respectively, individual ICs must be disposed at different locations (the display module and the main board), which entails management complexity wherein a host (CPU) must control them individually.

### SUMMARY

The present disclosure provides a sensor capable of sensing a touch and a stylus with a single sensor by integrating a touch sensor and a stylus sensor into a single layer, a controller, and an electronic device comprising the same. Furthermore, the present disclosure provides a sensor capable of improving thickness and cost, and an electronic device comprising the same. Moreover, the present disclosure provides a controller configured to control various operations, such as a touch sensing operation, a stylus driving operation, and a stylus sensing operation of the sensor of the electronic device, and an electronic device comprising the same.

The following numbered embodiments (referred to as "embodiments") provide a basis for the disclosure and are part of the present invention. Features of the following embodiments may be combined with each other in any technically possible manner.

Embodiment 1. An electronic device, comprising:
a sensor comprising a plurality of first electrode patterns extending in a first direction and a plurality of second electrode patterns extending in a second direction crossing the first direction; and
a controller electrically connected to the sensor, and configured to control a touch sensing operation of sensing a touch of an object through the sensor, and a stylus driving operation for driving a stylus pen and/or a stylus sensing operation for sensing the stylus pen,
wherein each of the second electrode patterns has an open-loop shape in which one side of a closed loop is opened, and both ends of each second electrode pattern are configured to be respectively electrically connected to different terminals of the controller, and both ends of all of the plurality of second electrode patterns are disposed to face the same direction.

Embodiment 2. The electronic device according to embodiment 1, wherein one end of each of the plurality of first electrode patterns is electrically connected to the controller, and the other end thereof is electrically floating.

Embodiment 3. An electronic device, comprising:
a sensor comprising a plurality of first electrode patterns extending in a first direction and a plurality of second electrode patterns extending in a second direction crossing the first direction; and
a controller electrically connected to the sensor, and configured to control a touch sensing operation of sensing a touch of an object through the sensor, and a stylus driving operation for driving a stylus pen and/or a stylus sensing operation for sensing the stylus pen,
wherein both ends of each of the first electrode patterns are configured to be respectively electrically connected to different terminals of the controller, each of the second electrode patterns has an open-loop shape in which one side of a closed loop is opened, and both ends of each second electrode pattern are configured to be respectively electrically connected to different terminals of the controller, and both ends of some second electrode patterns among the plurality of second electrode patterns are disposed to face the same direction.

Embodiment 4. The electronic device according to embodiment 3, wherein both ends of remaining second electrode patterns among the plurality of second electrode patterns are disposed to face a direction opposite to a direction in which the both ends of the some second electrode patterns face.

Embodiment 5. The electronic device according to embodiment 4, wherein one end of each of the plurality of first electrode patterns is electrically connected to a different terminal of the controller, and wirings connected to the other ends of some first electrode patterns among the plurality of first electrode patterns and wirings connected to the other ends of remaining first electrode patterns are configured to be routed in opposite directions.

Embodiment 6. The electronic device according to embodiment 4, wherein the some second electrode patterns and the remaining second electrode patterns are alternately disposed one by one along the first direction.

Embodiment 7. The electronic device according to embodiment 3, wherein the plurality of first electrode patterns and the plurality of second electrode patterns are disposed on the same layer using a bridge, and are formed of a metal mesh material.

Embodiment 8. The electronic device according to embodiment 3, wherein the plurality of first electrode patterns and the plurality of second electrode patterns are respectively disposed on different layers, and are formed of a metal mesh material.

Embodiment 9. The electronic device according to embodiment 3, further comprising: a cover layer disposed on the sensor; a display panel disposed under the sensor; and a magnetic field shielding layer disposed under the display panel.

Embodiment 10. The electronic device according to embodiment 3, wherein the stylus pen is an electro-magnetic resonance (EMR) type.

Embodiment 11. The electronic device according to embodiment 3, wherein the controller comprises: a first controller configured to perform the touch sensing operation; and a second controller configured to perform the stylus driving/sensing operation, wherein the first controller and the second controller are configured as separate chips physically separated from each other.

Embodiment 12. The electronic device according to embodiment 11, further comprising: a signal transmitter for signal transmission between the first controller and the second controller, wherein the signal transmitter is configured to perform general purpose input/output (GPIO) or I2C communication.

Embodiment 13. The electronic device according to embodiment 3, wherein the controller is configured as a single IC in which a circuit configured to perform the touch sensing operation and a circuit configured to perform the stylus driving/sensing operation are integrated into one die.

Embodiment 14. The electronic device according to embodiment 3, wherein the controller is configured as a single IC in which a circuit configured to perform the touch sensing operation and a circuit configured to perform the stylus driving/sensing operation are respectively integrated into different dies.

Embodiment 15. The electronic device according to embodiment 3, wherein the controller is configured to perform the touch sensing operation in a first time period and perform the stylus driving/sensing operation in a second time period through a time division method, and divide the second time period again to respectively perform the stylus driving operation and the stylus sensing operation.

Embodiment 16. The electronic device according to embodiment 3, wherein the controller is configured to, during the stylus driving operation, apply a driving signal to one end of at least one of the plurality of first electrode patterns and apply an anti-phase signal or a ground signal to the other end to form a loop current in the at least one of the plurality of first electrode patterns.

Embodiment 17. The electronic device according to embodiment 3, wherein the controller is configured to, during a mutual touch sensing operation using the plurality of first electrode patterns, receive a touch sensing signal only through one end of both ends of each first electrode pattern among the plurality of first electrode patterns, and electrically float the other end.

Embodiment 18. The electronic device according to embodiment 3, wherein the controller is configured to perform a mutual touch sensing operation of applying a driving signal to at least one second electrode pattern among the plurality of second electrode patterns and receiving a sensing signal from at least one first electrode pattern among the plurality of first electrode patterns as the touch sensing operation, and electrically ground or float a second electrode pattern to which the driving signal is not applied and a first electrode pattern from which the sensing signal is not received during the mutual touch sensing operation.

Embodiment 19. The electronic device according to embodiment 3, wherein the controller is configured to, during the stylus driving operation, apply a first driving signal to one end of at least one second electrode pattern among the plurality of second electrode patterns, apply an anti-phase signal of the first driving signal to or ground the other end, and electrically float or ground remaining second electrode patterns.

Embodiment 20. The electronic device according to embodiment 3, wherein the controller is configured to, during the stylus sensing operation, perform an operation of detecting a location of the stylus pen by differentially processing a positive (+) stylus sensing signal from one end of at least one second electrode pattern among the plurality of second electrode patterns and a negative (-) stylus sensing signal from the other end.

Embodiment 21. The electronic device according to embodiment 3, wherein the controller is configured to, during the stylus sensing operation, receive a stylus sensing signal from one end of at least one second electrode pattern among the plurality of second electrode patterns, and electrically float, apply a constant voltage (VCOM) to, or ground the other end.

Embodiment 22. The electronic device according to embodiment 3, wherein the controller is configured to, during the stylus sensing operation, when a number of channels of the first electrode patterns or the second electrode patterns is greater than a number of receivers of the controller, perform sensing by dividing into channel regions using a multiplexer (MUX), and ground, apply a constant voltage (VCOM) to, or float a non-sensing channel.

Embodiment 23. The electronic device according to embodiment 3, wherein the controller is configured to perform the touch sensing operation, the stylus driving operation, and the stylus sensing operation according to time-divided periods in synchronization with a vertical synchronization signal (VSYNC) or a horizontal synchronization signal (HSYNC) which is a display driving signal.

According to an embodiment of the present disclosure, by integrating a touch sensor and a stylus sensor, the sensor, the controller, and the electronic device comprising the same can eliminate unnecessary thickness occurring in a conventional multi-layer stack structure and realize an ultra-thin structure of a display device. In addition, by removing an independent stylus sensor layer and related components, manufacturing costs can be significantly reduced, and yield can be improved through process simplification. Furthermore, by integrating separate driving IC functions, circuit design space can be optimized, and sensing efficiency can be maximized through an integrated driving method.

### BRIEF DESCRIPTION OF THE FIGURES

FIG. 1 is a diagram illustrating an electronic device according to a first embodiment of the present disclosure.
FIG. 2 is a cross-sectional view of the electronic device illustrated in FIG. 1, illustrating a portion of a sensor (100) and a display panel (600).
FIG. 3 is a diagram illustrating a modified embodiment of the electronic device illustrated in FIG. 1, in which an arrangement of second electrode patterns is modified.
FIG. 4 is a diagram illustrating another modified embodiment of the electronic device illustrated in FIG. 3, in which first electrode patterns have a double routing structure.
FIG. 5 is a diagram illustrating another modified embodiment of the electronic device illustrated in FIG. 1, in which both ends of the first electrode pattern are connected to different terminals.
FIG. 6 is a diagram illustrating another modified embodiment of the electronic device illustrated in FIG. 5, in which a wiring structure is modified to minimize a bezel.
FIG. 7 is a diagram illustrating another modified embodiment of the electronic device illustrated in FIG. 5, in which second electrode patterns are alternately disposed.
FIG. 8 is a diagram illustrating another modified embodiment of the electronic device illustrated in FIG. 6, in which second electrode patterns are alternately disposed.
FIG. 9 is a diagram illustrating a modified embodiment of the electronic device illustrated in FIG. 4.
FIG. 10 is a conceptual diagram of an electronic device comprising a sensor (1000) and a controller (3000) according to a second embodiment of the present disclosure, having a separated controller structure.
FIG. 11 is a conceptual diagram of an electronic device comprising a sensor (1000) and a controller (3000') according to a third embodiment of the present disclosure, comprising a multi-die package controller.
FIG. 12 is a conceptual diagram of an electronic device comprising a sensor (1000) and a controller (3000") according to a fourth embodiment of the present disclosure, comprising a single-die controller.
FIG. 13 is a diagram illustrating one method of controlling the sensor (1000) by the controllers (3000, 3000', 3000") illustrated in FIGS. 10 to 12, illustrating a time division control method.
FIG. 14 is a diagram illustrating another method of controlling the sensor (1000) by the controllers (3000, 3000', 3000") illustrated in FIGS. 10 to 12, illustrating a control method synchronized with a display driving signal.
FIG. 15 is a diagram illustrating an electronic device comprising a sensor and a controller according to a fifth embodiment of the present disclosure.
FIG. 16 is a diagram illustrating a modified embodiment of the electronic device illustrated in FIG. 15, comprising a signal transmitter for communication between controllers.
FIG. 17 is a diagram illustrating a mutual touch sensing control method in the sensor (1000) illustrated in FIGS. 10 to 12.
FIG. 18 is a diagram illustrating a mutual touch sensing control method in a sensor (1000‴) according to another embodiment of the present disclosure, illustrating a mutual touch sensing control method in a double routing structure (FIGS. 4 to 9).
FIG. 19 is a diagram illustrating a self-touch sensing method in the sensor (1000) illustrated in FIGS. 10 to 12.
FIG. 20 is a diagram illustrating a self-touch sensing control method in the sensor (1000‴) illustrated in FIG. 18, illustrating a self-touch sensing control method in a double routing structure.
FIGS. 21 and 22 are diagrams illustrating control methods for performing a stylus driving operation in the sensor (1000) illustrated in FIGS. 10 to 12.
FIGS. 23 and 24 are diagrams illustrating control methods for performing a stylus driving operation in the sensor (1000‴) illustrated in FIG. 18, illustrating a stylus driving control method in a double routing structure.
FIG. 25 is a diagram illustrating a stylus sensing control method in the sensor (1000) illustrated in FIGS. 10 to 12.
FIGS. 26 and 27 are diagrams illustrating stylus sensing control methods in the sensor (1000‴) illustrated in FIG. 18, illustrating a stylus sensing control method in a double routing structure.

### DETAILED DESCRIPTION

Hereinafter, preferred embodiments of the present disclosure will be described in detail with reference to the accompanying drawings. It should be noted that the same components in the drawings are denoted by the same reference numerals as much as possible even if they are shown in different drawings.

For convenience of description, an x direction and a y direction are defined based on the directions indicated in the following drawings. The x direction is a direction from left to right in the drawings, and the y direction is a direction from top to bottom in the drawings. In the present specification, when one direction is referred to as the x direction, a direction opposite thereto may be defined as a -x direction.

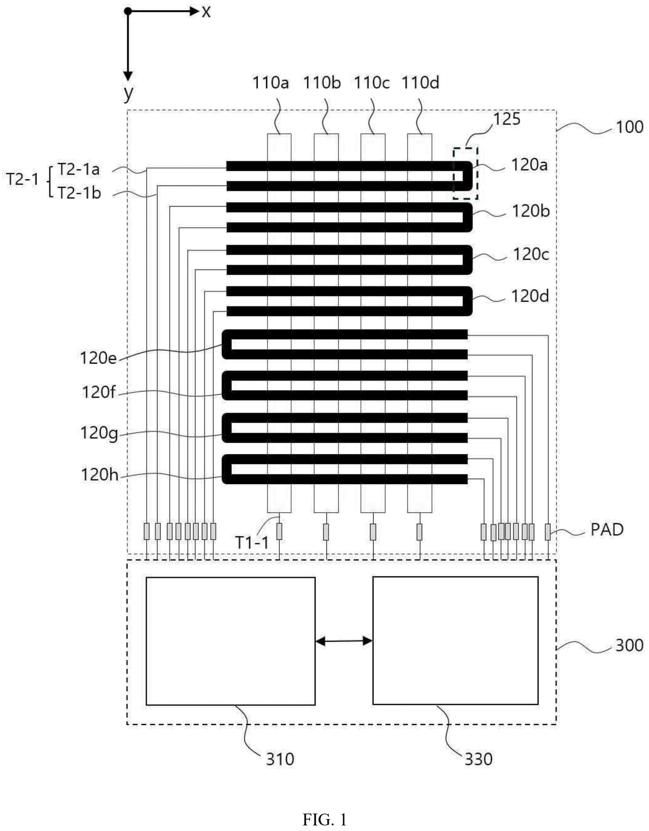

FIG. 1 is a diagram illustrating an electronic device according to a first embodiment of the present disclosure.

Referring to FIG. 1, the electronic device according to the first embodiment comprises a sensor 100 and a controller 300.

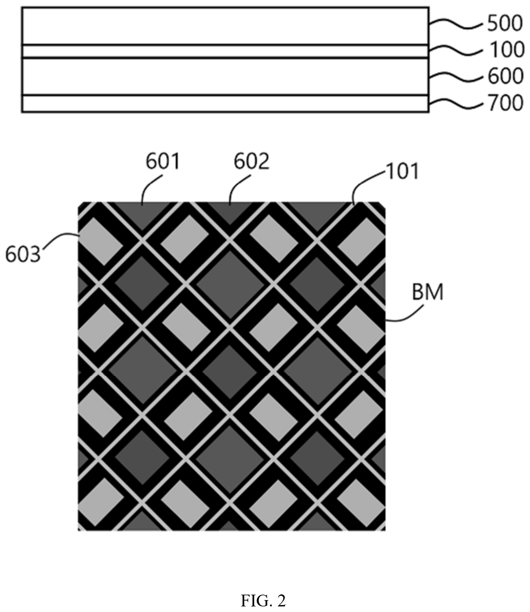

Meanwhile, as illustrated in FIG. 2, the electronic device according to the first embodiment, as well as electronic devices described below, may further comprise a window layer (or cover layer) 500 disposed on the sensor 100, and a display panel 600 disposed under the sensor 100. In other words, the sensor 100 may be disposed between the window layer 500 and the display panel 600. For example, the sensor 100 may be formed on an upper surface of an encapsulation layer of the display panel 600. In addition, the electronic device may further comprise a magnetic field shielding layer 700 disposed under the display panel.

Also, as illustrated in FIG. 2, a plurality of electrode patterns in the sensor 100 may be formed of a metal mesh 101. When the plurality of electrode patterns of the sensor 100 are formed of the metal mesh 101, the metal mesh 101 may be disposed to overlap a black matrix (BM) of the display panel 600. Here, the black matrix (BM) refers to a black region disposed between pixels 601, 602, and 603 of the display panel 600.

The sensor 100 comprises a plurality of first electrode patterns 110a, 110b, 110c, 110d and a plurality of second electrode patterns 120a, 120b, 120c, 120d, 120e, 120f, 120g, 120h. Here, the plurality of first electrode patterns 110a, 110b, 110c, 110d may be referred to as a plurality of first patterns, and the plurality of second electrode patterns 120a, 120b, 120c, 120d, 120e, 120f, 120g, 120h may also be referred to as a plurality of second patterns.

Each first electrode pattern 110a has a shape extending along a first direction y, and is configured such that at least one of both ends thereof is electrically connected to a controller 300. One end of the first electrode pattern 110a may be electrically connected to the controller 300 through a connection pattern T1-1. The one end of the first electrode pattern 110a may be located closer to the controller 300 than the other end of the first electrode pattern 110a. The other end of each first electrode pattern 110a is configured to be electrically floating.

Each first electrode pattern 110a may have a bar shape extending along the first direction y. However, the present disclosure is not limited thereto, and the first electrode pattern 110a may have a shape in which predetermined patterns are arranged along the first direction y, and the predetermined patterns are connected in series. Here, the predetermined patterns may have a rhombus or diamond shape.

The plurality of first electrode patterns 110a, 110b, 110c, 110d are arranged along a second direction x. The plurality of first electrode patterns 110a, 110b, 110c, 110d may be arranged at equal intervals along the second direction x.

Each second electrode pattern 120a has both ends respectively electrically connected to the controller 300. Here, both ends of the second electrode pattern 120a are disposed on the same side, which is in contrast to both ends of the first electrode pattern 110a being disposed on different sides.

At least one bent portion 125 is disposed between both ends of the second electrode pattern 120a. The bent portion 125 may have a shape bent at least twice or more to form a receiving space therein. The bent portion 125 may be formed to be rounded or angled. The bent portion 125 may alternatively be referred to as a curved portion. The bent portion 125 may also be used to mean a physical connection portion connecting two extension patterns arranged in parallel in the second direction x to form a closed loop.

Each second electrode pattern 120a may comprise two extension patterns arranged in parallel in the second direction x, and a connection pattern connecting the two extension patterns and having at least a portion disposed along the first direction y.

Each second electrode pattern 120a may have an open-loop shape in which one side of a closed loop is opened.

Each second electrode pattern 120a may have a U-shape. The U-shape may comprise an angled U-shape, a rounded U-shape, and an asymmetrical U-shape. Alternatively, each second electrode pattern 120a may have a horseshoe shape.

In the second electrode pattern 120a, both ends are respectively configured to be electrically connected to the controller 300. Both ends of the second electrode pattern 120a are electrically connected to the controller 300 through a pair of connection patterns T2-1. One end of the second electrode pattern 120a may be electrically connected to the controller 300 through one connection pattern T2-1a, and the other end may be electrically connected to the controller 300 through another connection pattern T2-1b.

The plurality of second electrode patterns 120a, 120b, 120c, 120d, 120e, 120f, 120g, 120h are arranged along the first direction y. The plurality of second electrode patterns 120a, 120b, 120c, 120d, 120e, 120f, 120g, 120h may be arranged at equal intervals along the first direction y.

A direction -x in which both ends of each of some second electrode patterns 120a, 120b, 120c, 120d face among the plurality of second electrode patterns 120a, 120b, 120c, 120d, 120e, 120f, 120g, 120h may be exactly opposite to a direction x in which both ends of each of the remaining second electrode patterns 120e, 120f, 120g, 120h face.

Alternatively, at least one second electrode pattern 120a among the plurality of second electrode patterns 120a, 120b, 120c, 120d, 120e, 120f, 120g, 120h arranged along the first direction y may be disposed to be symmetrical to at least another second electrode pattern 120e with respect to an axis parallel to the first direction y. For example, both ends of a plurality of second electrode patterns 120a, 120b, 120c, 120d continuously arranged along the first direction y among the plurality of second electrode patterns 120a, 120b, 120c, 120d, 120e, 120f, 120g, 120h may be disposed on the left side, and both ends of another plurality of second electrode patterns 120e, 120f, 120g, 120h continuously arranged along the first direction y may be disposed on the right side.

The sensor 100 comprises first connection patterns T1-1 for electrically connecting each of the first electrode patterns 110a, 110b, 110c, 110d to the controller 300, and second connection patterns T2-1 for electrically connecting each of the second electrode patterns 120a, 120b, 120c, 120d, 120e, 120f, 120g, 120h to the controller 300. At least one pad PAD may be disposed between each of the connection patterns T1-1, T2-1 and the controller 300.

The plurality of first connection patterns T1-1 may be formed of a metal mesh or a metal wire (or line). The plurality of second connection patterns T2-1 may also be formed of a metal mesh or a metal wire (or line).

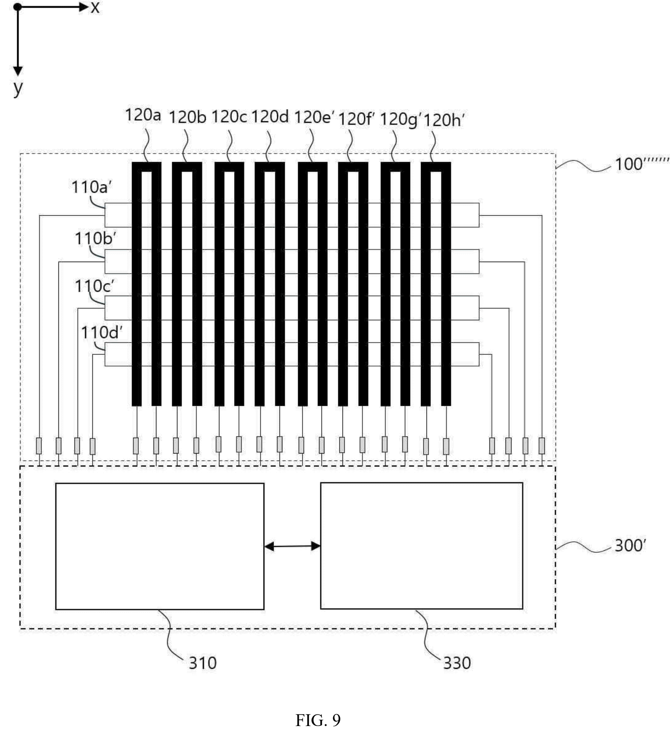

Unlike what is illustrated in the drawings, the horizontal and vertical directions of the sensor 100 may be interchanged. For example, as illustrated in FIG. 9, each of the first electrode patterns 110a, 110b, 110c, 110d may have a shape extending along the second direction x, and each of the second electrode patterns 120a, 120b, 120c, 120d, 120e, 120f, 120g, 120h may have a shape extending along the first direction y.

The plurality of first and second electrode patterns 110a, 110b, 110c, 110d, 120a, 120b, 120c, 120d, 120e, 120f, 120g, 120h in the sensor 100 may be configured on different layers or on the same layer. The plurality of first electrode patterns 110a, 110b, 110c, 110d and the plurality of second electrode patterns 120a, 120b, 120c, 120d, 120e, 120f, 120g, 120h illustrated in FIG. 1 may be respectively disposed on different layers for electrical insulation from each other. However, although not illustrated in a separate drawing, by using a bridge, the plurality of first electrode patterns 110a, 110b, 110c, 110d and the plurality of second electrode patterns 120a, 120b, 120c, 120d, 120e, 120f, 120g, 120h may be disposed on the same layer.

The controller 300 is electrically connected to the sensor 100 and is configured to control the sensor 100. The controller 300 may be configured to control the sensor 100 to perform various operations. Here, the various operations comprise an operation of sensing a touch or hovering of a conductive object such as a user's finger in the sensor 100, an operation of driving a stylus pen, and an operation of sensing the stylus pen. In addition, the various operations may further comprise an operation of sensing a tilt and a pressure of the stylus pen.

The stylus pen mentioned in the present specification may be an electro-magnetic resonance (EMR) type stylus pen. The EMR type stylus pen is configured to electromagnetically interact with the sensor 100.

For example, the EMR type stylus pen may comprise an LC resonance circuit therein. The LC resonance circuit may resonate by a magnetic field generated in the sensor 100 to generate energy. By the generated energy, the stylus pen may emit a magnetic field signal to the outside, and the sensor 100 may sense the magnetic field signal. Meanwhile, a pen tip of the EMR type stylus pen may be formed of a non-conductive material. Also, although the EMR type stylus pen does not have a separate battery therein, a battery may be mounted therein in some cases.

The controller 300 may comprise a first controller 310 and a second controller 330. The first controller 310 and the second controller 330 may be configured to perform different functions from each other. For example, the first controller 310 may be configured to control the sensor 100 to perform a touch sensing operation. The second controller 330 may be configured to control the sensor 100 to perform a stylus driving operation and/or a stylus sensing operation.

The first controller 310 is electrically connected to a plurality of first electrode patterns 110a, 110b, 110c, 110d and a plurality of second electrode patterns 120a, 120b, 120c, 120d, 120e, 120f, 120g, 120h of the sensor 100, and the second controller 330 is configured to be electrically connected to the plurality of first electrode patterns 110a, 110b, 110c, 110d and the plurality of second electrode patterns 120a, 120b, 120c, 120d, 120e, 120f, 120g, 120h of the sensor 100.

The first controller 310 and the second controller 330 may be configured to be physically separated from each other. Being physically separated may mean that the first controller 310 and the second controller 330 are each configured as a separate chip. When the first controller 310 and the second controller 330 are physically separated from each other, the first controller 310 and the second controller 330 may be configured to communicate with each other. Each of the first controller 310 and the second controller 330 may comprise a communication module for communication with each other. The first controller 310 and the second controller 330 may be configured to communicate with each other to determine a control sequence or operation of the sensor 100.

The first controller 310 and the second controller 330 may be configured to control the sensor 100 in a time-division manner. For example, the first controller 310 may be configured to control the sensor 100 in a certain first time period, and the second controller 330 may be configured to control the sensor 100 in a second time period after the first time period. Here, the second time period may be divided into at least two time periods, such that the second controller 300 may control the sensor 100 to perform a first operation in a 2-1 time period, and the second controller 300 may control the sensor 100 to perform a second operation different from the first operation in a 2-2 time period. For example, in the 2-1 time period, the second controller 300 may perform an operation of driving the stylus pen by using the sensor 100, and in the 2-2 time period, the second controller 300 may perform an operation of receiving a pen signal emitted from the stylus pen by using the sensor 100.

Meanwhile, the first controller 310 and the second controller 330 may be configured as a single controller 300. When configured as the single controller 300, the single controller 300 may comprise a first die performing functions of the first controller 310 and a second die performing functions of the second controller 330, or may be configured to have a single die performing functions of the first and second controllers 310 and 330.

In the electronic device illustrated in FIG. 1, as the sensor 100 is controlled by the controller 300, the electronic device may not only detect whether a touch of a conductive object such as a finger occurs and a location of the touch (a touch sensing mode), but also drive an external stylus pen (a stylus driving mode or an uplink mode) or detect a location of the stylus pen by sensing a pen signal emitted from the stylus pen (a stylus sensing mode or a downlink mode). Hereinafter, it will be described in detail with an example.

### Touch Sensing Mode (Touch Sensing Operation)

This is a method in which the controller 300 performs an operation of detecting whether a touch of an object occurs and a touch location by using the sensor 100, and is a mode of detecting a capacitance variation between a plurality of first electrode patterns 110a, 110b, 110c, 110d and a plurality of second electrode patterns 120a, 120b, 120c, 120d, 120e, 120f, 120g, 120h. In this mode, the controller 300 may be configured to apply a touch driving signal to at least one of the plurality of first electrode patterns 110a, 110b, 110c, 110d, and receive a touch sensing signal from the plurality of second electrode patterns 120a, 120b, 120c, 120d, 120e, 120f, 120g, 120h. Here, the controller 300 may be configured to electrically connect both ends of each second electrode pattern 120a to receive the touch sensing signal from each second electrode pattern 120a. For example, the controller 300 may comprise a switch unit (not illustrated) configured to electrically connect both ends of each second electrode pattern 120a. The controller 300 may electrically connect both ends of each second electrode pattern 120a to each other or electrically disconnect them from each other by controlling the switch unit (not illustrated).

Conversely, the controller 300 may be configured to apply the touch driving signal to at least one of the plurality of second electrode patterns 120a, 120b, 120c, 120d, 120e, 120f, 120g, 120h, and receive the touch sensing signal from the plurality of first electrode patterns 110a, 110b, 110c, 110d. Here, the controller 300 may be configured to electrically connect both ends of each second electrode pattern 120a, as described above, to apply the touch driving signal to each second electrode pattern 120a.

Although the above description has described a mutual sensing method, the controller 300 may also control the plurality of first electrode patterns 110a, 110b, 110c, 110d and the plurality of second electrode patterns 120a, 120b, 120c, 120d, 120e, 120f, 120g, 120h in a self-sensing method. For example, the controller 300 may be configured to apply a self-driving signal to the plurality of first electrode patterns 110a, 110b, 110c, 110d and receive a self-sensing signal from the plurality of first electrode patterns 110a, 110b, 110c, 110d. Alternatively, the controller 300 may be configured to apply a self-driving signal to the plurality of second electrode patterns 120a, 120b, 120c, 120d, 120e, 120f, 120g, 120h and receive a self-sensing signal from the plurality of second electrode patterns 120a, 120b, 120c, 120d, 120e, 120f, 120g, 120h. Here, when applying the self-driving signal to the plurality of first electrode patterns 110a, 110b, 110c, 110d and receiving the self-sensing signal from the plurality of first electrode patterns 110a, 110b, 110c, 110d, the same signal as the self-driving signal is applied to the plurality of second electrode patterns 120a, 120b, 120c, 120d, 120e, 120f, 120g, 120h as well, whereby a mutual capacitance between the first electrode patterns 110a, 110b, 110c, 110d and the second electrode patterns 120a, 120b, 120c, 120d, 120e, 120f, 120g, 120h may be electrically excluded, and only a self-capacitance may be sensed. Similarly, when self-sensing is performed with the plurality of second electrode patterns 120a, 120b, 120c, 120d, 120e, 120f, 120g, 120h, the same signal as the self-driving signal may be applied to the plurality of first electrode patterns 110a, 110b, 110c, 110d.

The controller 300 may detect whether the touch of the object occurs and the touch location based on the signals provided through the mutual sensing method and/or the self-sensing method. Here, the touch sensing mode may be performed by the first controller 310.

### Stylus Driving Mode or Uplink Mode (Stylus Driving Operation)

As a method in which the controller 300 performs an operation of driving the stylus pen by using the sensor 100, the controller 300 may be configured to apply a pen driving signal to at least one of a plurality of second electrode patterns 120a, 120b, 120c, 120d, 120e, 120f, 120g, 120h. In order to apply the pen driving signal to each second electrode pattern 120a, the controller 300 may be configured to electrically disconnect both ends of each second electrode pattern 120a, and apply the pen driving signal to at least one of both ends. The controller 300 may be configured to electrically ground the other of both ends of each second electrode pattern 120a, or apply a signal having the same magnitude as and an exactly opposite phase to the pen driving signal. That is, the controller 300 may be configured to apply different pen driving signals to both ends of each second electrode pattern 120a.

Meanwhile, as another method in which the controller 300 drives the stylus pen by using the sensor 100, the controller 300 may be configured to apply the pen driving signal to at least two or more of a plurality of first electrode patterns 110a, 110b, 110c, 110d. For example, the controller 300 may respectively apply the pen driving signal to two or more first electrode patterns 110a, 110b among the plurality of first electrode patterns 110a, 110b, 110c, 110d. Here, the controller 300 may be configured to apply the pen driving signal to one or more first electrode patterns 110a among the two or more first electrode patterns 110a, 110b, and electrically ground the other one or more first electrode patterns 110b or apply a signal having the same magnitude as and an exactly opposite phase to the pen driving signal.

Meanwhile, as yet another method in which the controller 300 drives the stylus pen by using the sensor 100, the controller 300 may be configured to apply the pen driving signal to at least one of the plurality of first electrode patterns 110a, 110b, 110c, 110d, while applying the pen driving signal to at least one of the plurality of second electrode patterns 120a, 120b, 120c, 120d, 120e, 120f, 120g, 120h. For example, in consideration of a location of the stylus pen, the controller 300 may be configured to apply the pen driving signal to one or more first electrode patterns 110a, 110b and one or more second electrode patterns 120a such that a magnetic field is formed relatively large at a specific location on the sensor 100.

The stylus driving mode may be performed by the second controller 330.

### Stylus Sensing Mode or Downlink Mode (Stylus Sensing Operation)

As a method in which the controller 300 receives a pen signal emitted from the stylus pen by using the sensor 100, the controller 300 may detect a location of the stylus pen on an x-axis by receiving pen sensing signals received from the plurality of first electrode patterns 110a, 110b, 110c, 110d, and detect a location of the stylus pen on a y-axis by receiving pen sensing signals received from the plurality of second electrode patterns 120a, 120b, 120c, 120d, 120e, 120f, 120g, 120h.

An electromagnetic field is formed around the stylus pen by the pen signal from the stylus pen, and a current or voltage signal may be induced in some electrode patterns among the plurality of first electrode patterns 110a, 110b, 110c, 110d and some electrode patterns among the plurality of second electrode patterns 120a, 120b, 120c, 120d, 120e, 120f, 120g, 120h located around the formed electromagnetic field. The controller 300 may receive the induced current or voltage signal to determine the location of the stylus pen.

To this end, the controller 300 may cause a current or voltage signal to be induced in each first electrode pattern 110a, and cause a current or voltage signal to be induced in some electrode patterns among the plurality of second electrode patterns 120a, 120b, 120c, 120d, 120e, 120f, 120g, 120h by electrically disconnecting both ends of each second electrode pattern 120a.

The controller 300 may sense the location of the pen on the x-axis by removing noise and improving a signal-to-noise ratio by differentially processing two pen sensing signals provided from two adjacent first electrode patterns 110a, 110b among the plurality of first electrode patterns 110a, 110b, 110c, 110d.

The controller 300 may sense the location of the pen on the y-axis by removing noise and improving a signal-to-noise ratio by differentially processing two pen sensing signals respectively provided from both ends of each second electrode pattern 120a. Alternatively, the controller 300 may electrically ground one end of both ends of each second electrode pattern 120a and receive the pen sensing signal only from the other end to sense the location of the pen on the y-axis. Alternatively, the controller 300 may sense the location of the pen on the y-axis by differentially processing two pen sensing signals provided from the other ends of two different second electrode patterns 120a, 120b among the plurality of second electrode patterns.

The stylus sensing mode may be performed by the second controller 330.

Hereinafter, modified embodiments of the electronic device illustrated in FIG. 1 will be described with reference to the accompanying drawings.

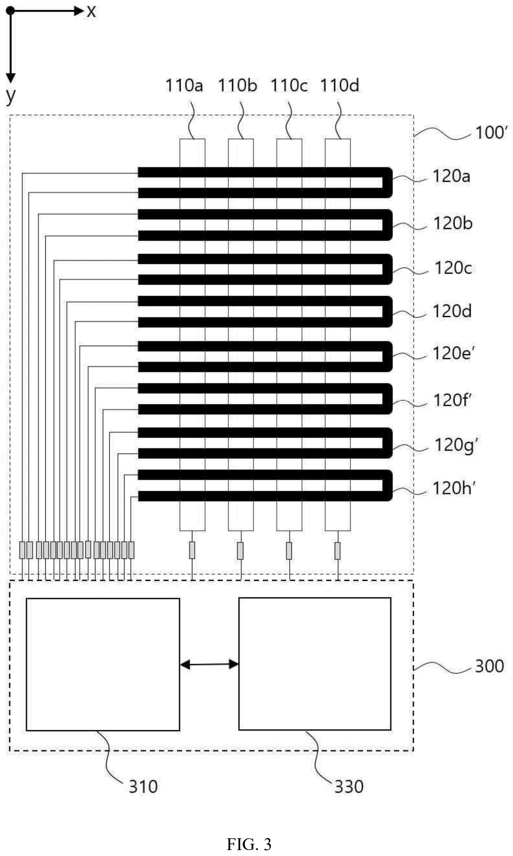

FIG. 3 is a diagram illustrating a modified embodiment of the electronic device illustrated in FIG. 1, in which an arrangement of second electrode patterns is modified.

The embodiment of FIG. 3 is different from FIG. 1 in a plurality of second electrode patterns 120a, 120b, 120c, 120d, 120e', 120f, 120g', 120h' of a sensor 100'. Specifically, it is different from FIG. 1 in that all of the plurality of second electrode patterns 120a, 120b, 120c, 120d, 120e', 120f, 120g', 120h' are disposed in the same direction. Both ends of all of the plurality of second electrode patterns 120a, 120b, 120c, 120d, 120e', 120f, 120g', 120h' are disposed on the left side. Meanwhile, unlike what is illustrated in the drawing, both ends of all of the plurality of second electrode patterns 120a, 120b, 120c, 120d, 120e', 120f', 120g', 120h' may be disposed on the right side.

Since all of the plurality of second electrode patterns 120a, 120b, 120c, 120d, 120e', 120f, 120g', 120h' are disposed in the same direction, there is an advantage of eliminating a signal discontinuity that may occur in the left-right symmetrical structure of some second electrode patterns 120a, 120b, 120c, 120d and other second electrode patterns 120e, 120f, 120g, 120h in FIG. 1.

The electronic device illustrated in FIG. 3 may also detect whether a touch of an object occurs and a touch location in the same manner as the electronic device illustrated in FIG. 1, and may detect a location of a stylus pen by driving the stylus pen and/or sensing a pen signal from the stylus pen.

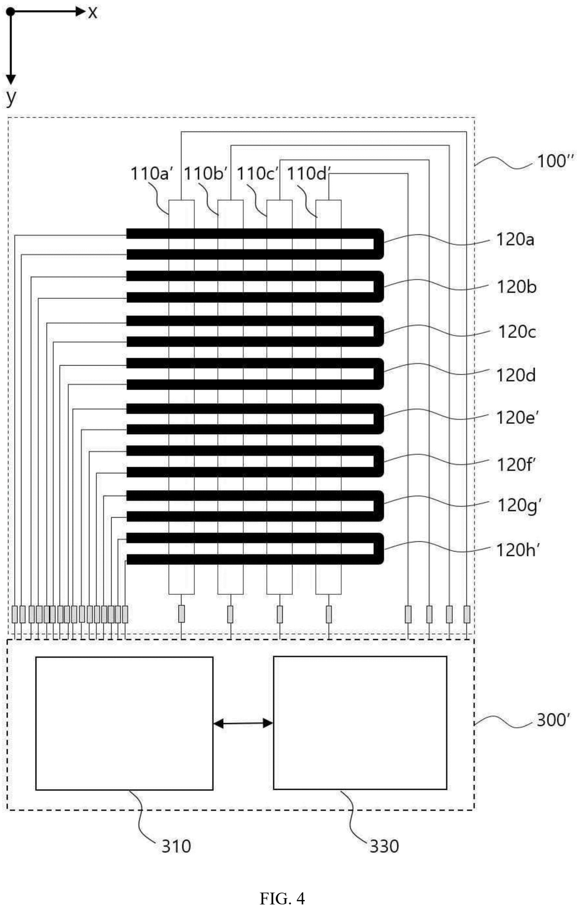

FIG. 4 is a diagram illustrating another modified embodiment of the electronic device illustrated in FIG. 3, in which a first electrode pattern has a double routing structure.

The embodiment of FIG. 4 is different from FIG. 3 in a plurality of first electrode patterns 110a', 110b', 110c', 110d' of a sensor 100". Specifically, it is different in that both ends of each first electrode pattern 110a' among the plurality of first electrode patterns 110a', 110b', 110c', 110d' are respectively electrically connected to a controller 300'. In FIG. 3, only one end of each first electrode pattern 110a is electrically connected to the controller 300, and the other end is electrically floating. However, in the embodiment of FIG. 4, both one end and the other end of each first electrode pattern 110a' are electrically connected to the controller 300'. At this time, the one end and the other end of each first electrode pattern 110a' are respectively connected to different terminals of the controller 300'. In other words, each first electrode pattern 110a' also has a double routing structure like each second electrode pattern 120a. Since both ends of each first electrode pattern 110a' are connected to the controller 300', the double routing structure has an advantage of reducing a resistance of the first electrode pattern 110a' compared to FIGS. 1 and 3.

The electronic device illustrated in FIG. 4 may also detect whether the touch of the object occurs and the touch location in the same manner as the electronic device illustrated in FIG. 3, and may detect the location of the stylus pen by driving the stylus pen and/or sensing the pen signal from the stylus pen. Hereinafter, it will be described in detail with an example.

### Touch Sensing Mode (Touch Sensing Operation)

This is a method in which the controller 300' performs an operation of detecting whether a touch of an object occurs and a touch location by using the sensor 100', and is a mode of detecting a capacitance variation between a plurality of first electrode patterns 110a', 110b', 110c', 110d' and a plurality of second electrode patterns 120a, 120b, 120c, 120d, 120e', 120f, 120g', 120h'. In this mode, the controller 300' may be configured to apply a touch driving signal to at least one of the plurality of first electrode patterns 110a', 110b', 110c', 110d', and receive a touch sensing signal from the plurality of second electrode patterns 120a, 120b, 120c, 120d, 120e', 120f, 120g', 120h' (a first sensing operation). Conversely, the controller 300' may be configured to apply the touch driving signal to at least one of the plurality of second electrode patterns 120a, 120b, 120c, 120d, 120e', 120f, 120g', 120h', and receive the touch sensing signal from the plurality of first electrode patterns 110a', 110b', 110c', 110d' (a second sensing operation).

In the case of the first sensing operation, the controller 300' may control the other of both ends of each first electrode pattern 110a' to be electrically floating. Alternatively, the controller 300' may control both ends of each first electrode pattern 110a' to be electrically connected to each other such that the same touch driving signal is applied to both ends of each first electrode pattern 110a'. Alternatively, the controller 300' may control the same touch driving signal to be applied to both ends of each first electrode pattern 110a' even if different driving units (not illustrated) exist at both ends of each first electrode pattern 110a'.

In the case of the first sensing operation, the controller 300' may be configured to electrically connect both ends of each second electrode pattern 120a to receive the touch sensing signal from each second electrode pattern 120a. For example, the controller 300' may comprise a switch unit (not illustrated) configured to electrically connect both ends of each second electrode pattern 120a. The controller 300' may electrically connect both ends of each second electrode pattern 120a to each other or electrically disconnect them from each other by controlling the switch unit (not illustrated).

In the case of the second sensing operation, the controller 300' may control the other of both ends of each second electrode pattern 120a to be electrically floating. Alternatively, the controller 300' may control both ends of each second electrode pattern 120a to be electrically connected to each other such that the same touch driving signal is applied to both ends of each second electrode pattern 120a. Alternatively, the controller 300' may control the same touch driving signal to be applied to both ends of each second electrode pattern 120a even if different driving units (not illustrated) exist at both ends of each second electrode pattern 120a.

In the case of the second sensing operation, the controller 300' may control both ends of each first electrode pattern 110a' to be electrically connected to each other, or either one of both ends to be electrically floating. For example, the controller 300' may comprise a switch unit (not illustrated) configured to electrically connect both ends of each first electrode pattern 110a'. The controller 300' may electrically connect both ends of each first electrode pattern 110a' to each other or electrically disconnect them from each other by controlling the switch unit (not illustrated).

Although the above description has described a mutual sensing method, the controller 300' may also control the plurality of first electrode patterns 110a', 110b', 110c', 110d' and the plurality of second electrode patterns 120a, 120b, 120c, 120d, 120e', 120f, 120g', 120h' in a self-sensing method. For example, the controller 300' may be configured to apply a self-driving signal to the plurality of first electrode patterns 110a', 110b', 110c', 110d' and receive a self-sensing signal corresponding to a self-capacitance from the plurality of first electrode patterns 110a', 110b', 110c', 110d' to which the self-driving signal is applied. Alternatively, the controller 300' may be configured to apply a self-driving signal to the plurality of second electrode patterns 120a, 120b, 120c, 120d, 120e', 120f, 120g', 120h' and receive a self-sensing signal from the plurality of second electrode patterns 120a, 120b, 120c, 120d, 120e', 120f, 120g', 120h' to which the self-driving signal is applied. Here, when applying the self-driving signal to the plurality of first electrode patterns 110a', 110b', 110c', 110d' and receiving the self-sensing signal from the plurality of first electrode patterns 110a', 110b', 110c', 110d', the same signal as the self-driving signal is applied to the plurality of second electrode patterns 120a, 120b, 120c, 120d, 120e', 120f, 120g', 120h' as well, whereby a mutual capacitance between the first electrode patterns 110a', 110b', 110c', 110d' and the second electrode patterns 120a, 120b, 120c, 120d, 120e', 120f, 120g', 120h' may be electrically excluded, and only a self-capacitance may be sensed. Similarly, when self-sensing is performed with the plurality of second electrode patterns 120a, 120b, 120c, 120d, 120e', 120f, 120g', 120h', the same signal as the self-driving signal may be applied to the plurality of first electrode patterns 110a', 110b', 110c', 110d'.

The controller 300' may detect whether the touch of the object occurs and the touch location based on the signals provided through the mutual sensing method and/or the self-sensing method. Here, the touch sensing mode may be performed by the first controller 310.

### Stylus Driving Mode or Uplink Mode (Stylus Driving Operation)

As a method in which the controller 300' performs an operation of driving the stylus pen by using the sensor 100", the controller 300' may be configured to apply a pen driving signal to at least one of a plurality of second electrode patterns 120a, 120b, 120c, 120d, 120e', 120f, 120g', 120h'. In order to apply the pen driving signal to each second electrode pattern 120a, the controller 300' may be configured to electrically disconnect both ends of each second electrode pattern 120a, and apply the pen driving signal to at least one of both ends. The controller 300' may be configured to electrically ground the other of both ends of each second electrode pattern 120a, or apply a signal having the same magnitude as and an exactly opposite phase to the pen driving signal. That is, the controller 300' may be configured to apply different pen driving signals to both ends of each second electrode pattern 120a.

As another method in which the controller 300' drives the stylus pen by using the sensor 100", the controller 300' may be configured to apply the pen driving signal to at least two or more of a plurality of first electrode patterns 110a', 110b', 110c', 110d'. For example, the controller 300' may control both ends of each first electrode pattern 110a' to allow a predetermined current to flow in each first electrode pattern 110a'. For example, the controller 300' may control the pen driving signal to be applied to one end of one first electrode pattern 110a' while grounding the other end of the first electrode pattern 110a' or applying an inverse signal of the pen driving signal. In addition, the controller 300' may control one end of another first electrode pattern 110b' to be grounded or to receive the inverse signal of the pen driving signal, and control the pen driving signal to be applied to the other end. By controlling in this manner, currents having opposite directions may flow in the one first electrode pattern 110a' and the other first electrode pattern 110b'.

Meanwhile, as yet another method in which the controller 300' drives the stylus pen by using the sensor 100", the controller 300' may be configured to apply the pen driving signal to at least one of the plurality of first electrode patterns 110a', 110b', 110c', 110d', while applying the pen driving signal to at least one of the plurality of second electrode patterns 120a, 120b, 120c, 120d, 120e', 120f', 120g', 120h'. For example, in consideration of a location of the stylus pen, the controller 300' may be configured to apply the pen driving signal to one or more first electrode patterns 110a', 110b' and one or more second electrode patterns 120a such that a magnetic field is formed relatively large at a specific location on the sensor 100".

The stylus driving mode may be performed by the second controller 330.

### Stylus Sensing Mode or Downlink Mode (Stylus Sensing Operation)

As a method in which the controller 300' receives a pen signal emitted from the stylus pen by using the sensor 100", the controller 300' may detect a location of the stylus pen on an x-axis by receiving pen sensing signals received from the plurality of first electrode patterns 110a', 110b', 110c', 110d', and detect a location of the stylus pen on a y-axis by receiving pen sensing signals received from the plurality of second electrode patterns 120a, 120b, 120c, 120d, 120e', 120f, 120g', 120h'.

An electromagnetic field is formed around the stylus pen by the pen signal from the stylus pen, and a current or voltage signal may be induced in some electrode patterns among the plurality of first electrode patterns 110a', 110b', 110c', 110d' and some electrode patterns among the plurality of second electrode patterns 120a, 120b, 120c, 120d, 120e', 120f, 120g', 120h' located around the formed electromagnetic field. The controller 300' may receive the induced current or voltage signal to determine the location of the stylus pen.

To this end, the controller 300' may control both ends of each first electrode pattern 110a' to cause a current or voltage signal by the pen signal to be induced in each first electrode pattern 110a', and cause a current or voltage signal to be induced in some electrode patterns among the plurality of second electrode patterns 120a, 120b, 120c, 120d, 120e', 120f, 120g', 120h' by electrically disconnecting both ends of each second electrode pattern 120a.

The controller 300' may sense the location of the pen on the x-axis by differentially processing two pen sensing signals respectively provided from both ends of each first electrode pattern 110a'. Alternatively, the controller 300' may electrically ground one end of both ends of each first electrode pattern 110a' and receive the pen sensing signal only from the other end to sense the location of the pen on the x-axis. Alternatively, the controller 300' may sense the location of the pen on the x-axis by removing noise and improving a signal-to-noise ratio by differentially processing two pen sensing signals provided from the other ends of two different first electrode patterns 110a', 110b' among the plurality of first electrode patterns.

The controller 300' may sense the location of the pen on the y-axis by removing noise and improving a signal-to-noise ratio by differentially processing two pen sensing signals respectively provided from both ends of each second electrode pattern 120a. Alternatively, the controller 300' may electrically ground one end of both ends of each second electrode pattern 120a and receive the pen sensing signal only from the other end to sense the location of the pen on the y-axis. Alternatively, the controller 300' may sense the location of the pen on the y-axis by differentially processing two pen sensing signals provided from the other ends of two different second electrode patterns 120a, 120b among the plurality of second electrode patterns.

The stylus sensing mode may be performed by the second controller 330.

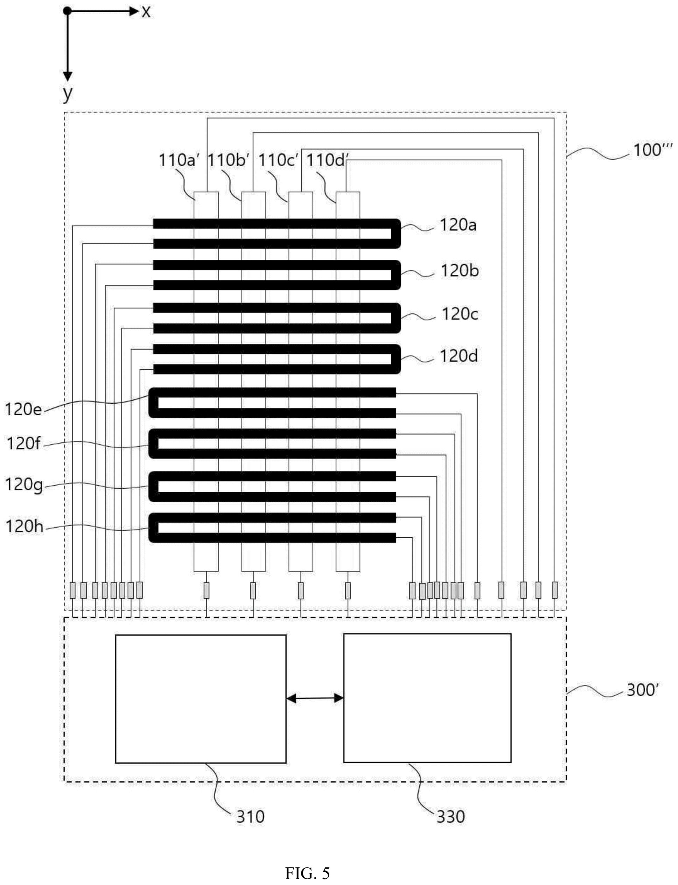

FIG. 5 is a diagram illustrating another modified embodiment of the electronic device illustrated in FIG. 1, in which both ends of a first electrode pattern are connected to different terminals.

The embodiment of FIG. 5 is different from FIG. 1 in a plurality of first electrode patterns 110a', 110b', 110c', 110d' of a sensor 100"'. Specifically, it is different in that both ends of each first electrode pattern 110a' among the plurality of first electrode patterns 110a', 110b', 110c', 110d' are respectively electrically connected to a controller 300'. In FIG. 1, only one end of each first electrode pattern 110a is electrically connected to the controller 300, and the other end is electrically floating. However, in the embodiment of FIG. 5, both one end and the other end of each first electrode pattern 110a' are electrically connected to the controller 300'. At this time, the one end and the other end of each first electrode pattern 110a' are respectively connected to different terminals of the controller 300'.

The electronic device illustrated in FIG. 5 may also detect whether a touch of an object occurs and a touch location in the same manner as the electronic device illustrated in FIG. 1, and may detect a location of a stylus pen by driving the stylus pen and/or sensing a pen signal from the stylus pen. Here, an operation or control of the controller 300' by the sensor 100‴ comprising the plurality of first electrode patterns 110a', 110b', 110c', 110d' is different from that of the controller 300 of FIG. 1. The specific differences will be replaced with the description of FIG. 4.

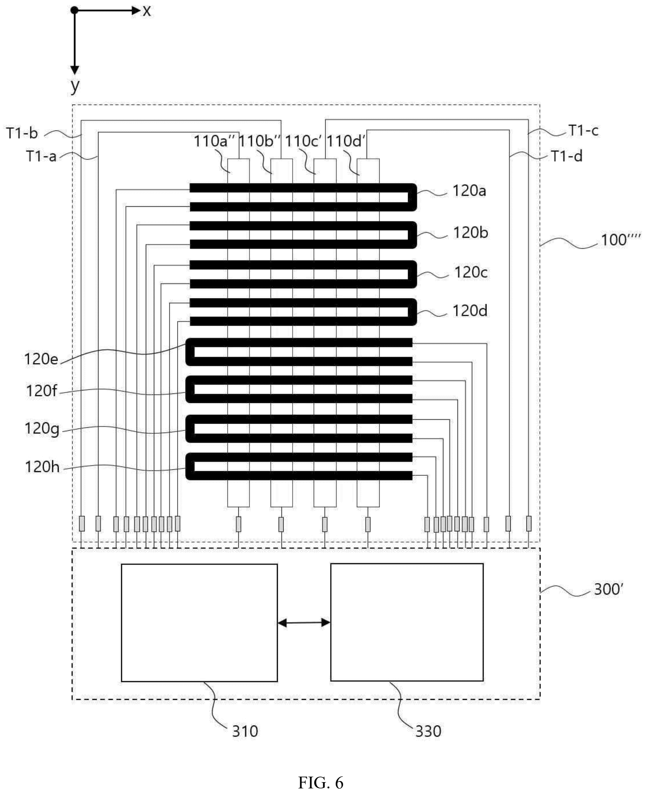

FIG. 6 is a diagram illustrating another modified embodiment of the electronic device illustrated in FIG. 5, in which a wiring structure is modified to minimize a bezel.

The embodiment of FIG. 6 is different from FIG. 5 in a plurality of first electrode patterns 110a", 110b", 110c', 110d' of a sensor 100ʺʺ. Specifically, connection patterns T1-a, T1-b connected to the other of both ends of some first electrode patterns 110a", 110b" among the plurality of first electrode patterns 110a", 110b", 110c', 110d' are disposed to be left-right symmetrical to connection patterns T1-c, T1-d connected to the other of both ends of the remaining first electrode patterns 110c', 110d'. More specifically, the connection patterns T1-a, T1-b connected to the other ends of the some first electrode patterns 110a", 110b" turn to the left and are connected to the controller 300', and the connection patterns T1-c, T1-d connected to the other ends of the remaining first electrode patterns 110c', 110d' turn to the right and are connected to the controller 300'.

As the connection patterns T1-a, T1-b connected to the other ends of the some first electrode patterns 110a", 110b" are disposed to be left-right symmetrical to the connection patterns T1-c, T1-d connected to the other ends of the remaining first electrode patterns 110c', 110d' in this manner, there is an advantage of minimizing both bezels of the electronic device.

The electronic device illustrated in FIG. 6 may also detect whether the touch of the object occurs and the touch location in the same manner as the electronic device illustrated in FIG. 1, and may detect the location of the stylus pen by driving the stylus pen and/or sensing the pen signal from the stylus pen. Here, an operation or control of the controller 300' by the sensor 100ʺʺ comprising the plurality of first electrode patterns 110a', 110b', 110c', 110d' is different from that of the controller 300 of FIG. 1. The specific differences will be replaced with the description of FIG. 4.

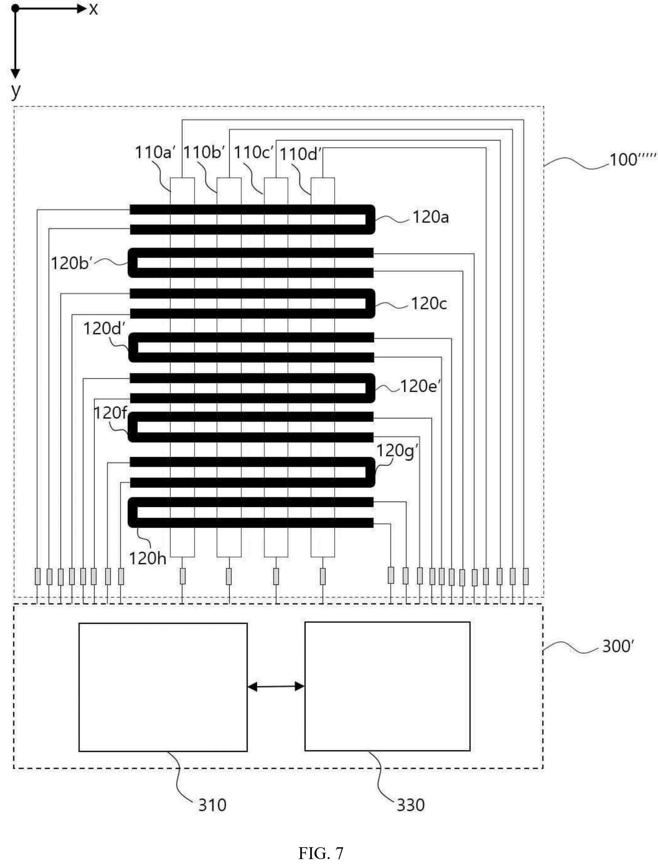

FIG. 7 is a diagram illustrating another modified embodiment of the electronic device illustrated in FIG. 5, in which second electrode patterns are alternately disposed.

The embodiment of FIG. 7 is different from FIG. 5 in a plurality of second electrode patterns 120a, 120b', 120c, 120d', 120e', 120f, 120g', 120h of a sensor 100‴ʺ. Specifically, some second electrode patterns 120b', 120d', 120f, 120h of which both ends are disposed on the left side and the remaining second electrode patterns 120a, 120c, 120e', 120g' of which both ends are disposed on the right side among the plurality of second electrode patterns 120a, 120b', 120c, 120d', 120e', 120f, 120g', 120h are alternately disposed one by one along the first direction y.

The electronic device illustrated in FIG. 7 may also detect whether the touch of the object occurs and the touch location in the same manner as the electronic device illustrated in FIG. 5, and may detect the location of the stylus pen by driving the stylus pen and/or sensing the pen signal from the stylus pen.

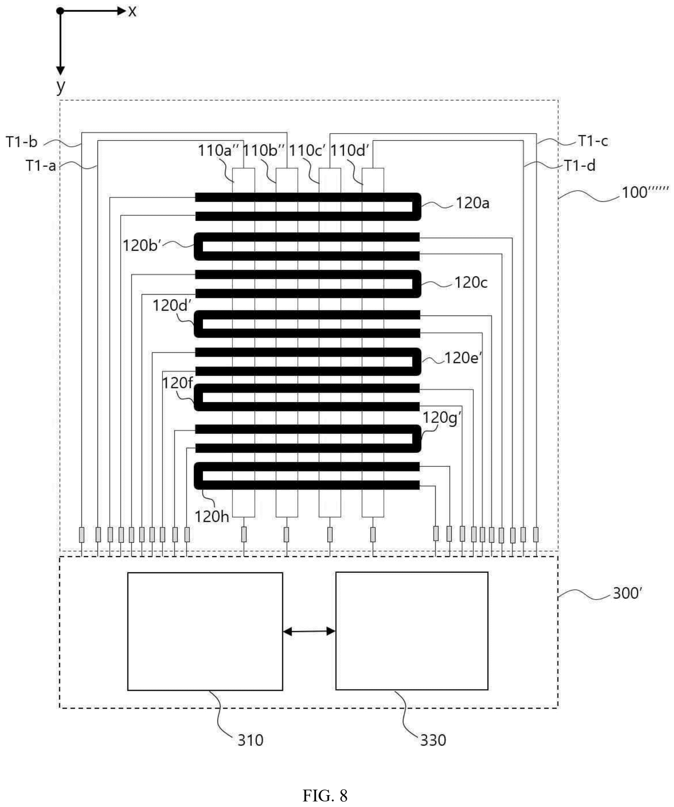

FIG. 8 is a diagram illustrating another modified embodiment of the electronic device illustrated in FIG. 6, in which second electrode patterns are alternately disposed.

The embodiment of FIG. 8 is different from FIG. 6 in a plurality of second electrode patterns 120a, 120b', 120c, 120d', 120e', 120f, 120g', 120h of a sensor 100""". Specifically, some second electrode patterns 120b', 120d', 120f, 120h of which both ends are disposed on the left side and the remaining second electrode patterns 120a, 120c, 120e', 120g' of which both ends are disposed on the right side among the plurality of second electrode patterns 120a, 120b', 120c, 120d', 120e', 120f, 120g', 120h are alternately disposed one by one along the first direction y.

The electronic device illustrated in FIG. 8 may also detect whether a touch of an object occurs and a touch location in the same manner as the electronic device illustrated in FIG. 6, and may detect a location of a stylus pen by driving the stylus pen and/or sensing a pen signal from the stylus pen.

FIG. 9 is a diagram illustrating a modified embodiment of the electronic device illustrated in FIG. 4.

A sensor 100‴ʺʺ of the embodiment of FIG. 9 is different from the sensor 100" of FIG. 4. Specifically, it is different in that the plurality of first electrode patterns 110a', 110b', 110c', 110d' of the sensor 100" of FIG. 4 have a shape extending in the second direction x in the sensor 100‴ʺʺ of FIG. 9, and the plurality of second electrode patterns 120a, 120b, 120c, 120d, 120e', 120f, 120g', 120h' of the sensor 100" of FIG. 4 have a shape extending in the first direction y in the sensor 100‴ʺʺ of FIG. 9.

The sensor 100‴ʺʺ of FIG. 9 may have a useful structure when the number of the plurality of second electrode patterns 120a, 120b, 120c, 120d, 120e', 120f, 120g', 120h' is greater than the number of the plurality of first electrode patterns 110a', 110b', 110c', 110d'. Since both ends of each second electrode pattern 120a are respectively connected to different terminals of the controller 300', the number of channels of the plurality of second electrode patterns 120a, 120b, 120c, 120d, 120e', 120f, 120g', 120h' increases more than twice as much as the plurality of first electrode patterns 110a', 110b', 110c', 110d'. Since both ends of the plurality of second electrode patterns 120a, 120b, 120c, 120d, 120e', 120f, 120g', 120h' can be disposed closest to the controller 300' in this manner, there is an advantage of simplifying an electrical connection structure between the plurality of second electrode patterns 120a, 120b, 120c, 120d, 120e', 120f, 120g', 120h' and the controller 300'. Furthermore, there is an advantage of reducing a bezel of the electronic device.

The electronic device illustrated in FIG. 9 may also detect whether the touch of the object occurs and the touch location in the same manner as the electronic device illustrated in FIG. 4, and may detect the location of the stylus pen by driving the stylus pen and/or sensing the pen signal from the stylus pen.

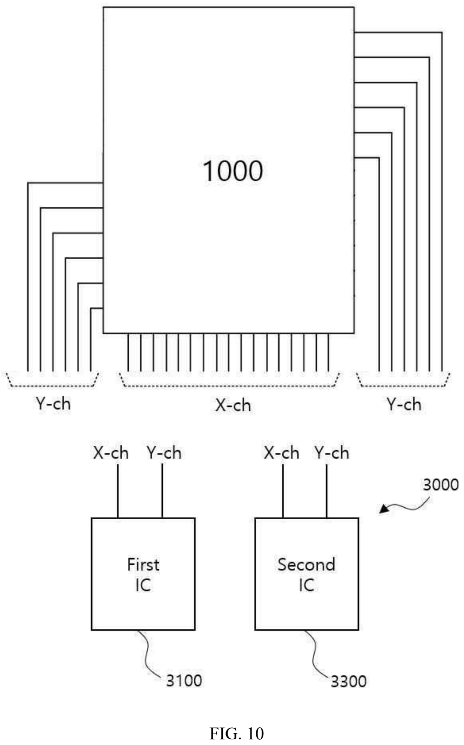

FIG. 10 is a conceptual diagram of an electronic device comprising a sensor 1000 and a controller 3000 according to a second embodiment of the present disclosure, having a separated controller structure.

The sensor 1000 illustrated in FIG. 10 comprises a plurality of electrode patterns, and comprises a plurality of channels X-ch, Y-ch electrically connected to the plurality of electrode patterns. Each of the channels X-ch, Y-ch is configured to be electrically connected to at least one of the plurality of electrode patterns included in the sensor 1000. Each of the channels X-ch, Y-ch is configured to be electrically connected to the controller 3000.

The plurality of electrode patterns included in the sensor 1000 may comprise the plurality of first electrode patterns and the plurality of second electrode patterns illustrated in FIGS. 1 and 3 to 8. Here, the sensor 1000 may further comprise additional electrode patterns in addition to the plurality of first electrode patterns and the plurality of second electrode patterns illustrated in FIGS. 1 and 3 to 8.

The sensor 1000 is configured such that each channel necessary for sensing is able to be shared or separated. For example, the plurality of channels X-ch, Y-ch may be configured to be used for both the touch sensing operation and the stylus driving/sensing operation. Alternatively, some of the plurality of channels X-ch, Y-ch may be used for the touch sensing operation, and the others of the plurality of channels X-ch, Y-ch may be used for the stylus driving/sensing operation to be configured separately from each other. Alternatively, each channel may be configured to be independently used for the touch sensing operation and the stylus driving/sensing operation.

The plurality of electrode patterns in the sensor 1000 may be formed of a material such as a metal mesh. The plurality of electrode patterns in the sensor 1000 may be disposed on at least two or more different layers, or may be configured on the same layer.

When the plurality of electrode patterns of the sensor 1000 are configured on the same layer, a predetermined operation method is required for the controller 3000 to cause the sensor 1000 to respectively perform the touch sensing operation, the stylus driving operation, and the stylus sensing operation. This will be described later with reference to the drawings.

The controller 3000 may comprise a first controller 3100 and a second controller 3300 separated from each other. The first controller 3100 and the second controller 3300 may be configured as separate ICs. In an actual product, a chip for the first controller 3100 and a chip for the second controller 3300 may be disposed together on a single substrate.

The first controller 3100 may be configured to control the sensor 1000 to perform the touch sensing operation. The second controller 3300 may be configured to control the sensor 1000 to perform the stylus driving operation and/or the stylus sensing operation.

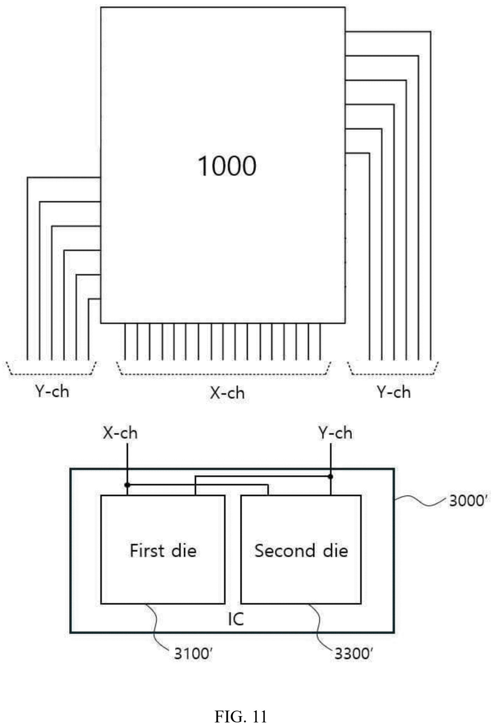

FIG. 11 is a conceptual diagram of an electronic device comprising a sensor 1000 and a controller 3000' according to a third embodiment of the present disclosure, comprising a multi-die package controller.

Since the sensor 1000 of FIG. 11 is identical to the sensor 1000 of FIG. 10, a detailed description thereof will be replaced with the previously described content.

The controller 3000' may be configured as a single IC comprising multi-dies 3100', 3300'. The controller 3000' may comprise a first die 3100' and a second die 3300' disposed therein. The first die 3100' and the second die 3300' may be configured to perform different functions from each other. The first die 3100' may be configured to perform a touch sensing operation, and the second die 3300' may be configured to perform a stylus driving operation and/or a stylus sensing operation.

Since the first die 3100' and the second die 3300' are mounted in one package, the controller 3000' has an advantage of reducing a size compared to the controller 3000 illustrated in FIG. 10.

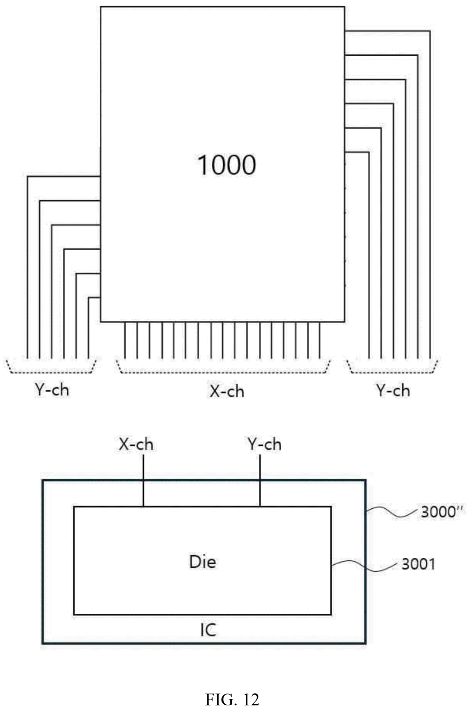

FIG. 12 is a conceptual diagram of an electronic device comprising a sensor 1000 and a controller 3000" according to a fourth embodiment of the present disclosure, comprising a single-die controller.

Since the sensor 1000 of FIG. 12 is identical to the sensor 1000 of FIG. 10, a detailed description thereof will be replaced with the previously described content.

The controller 3000" may be configured as a single IC having one die 3001. The one die 3001 may comprise a circuit configured to perform a touch sensing operation, and a circuit configured to perform a stylus driving operation and/or a stylus sensing operation.

The controller 3000" may be configured to integrally perform different functions through time division control or the like within the one die 3001.

The controller 3000" has an advantage of minimizing the number of parts and an area compared to the controllers 3000, 3000' illustrated in FIGS. 10 and 11.

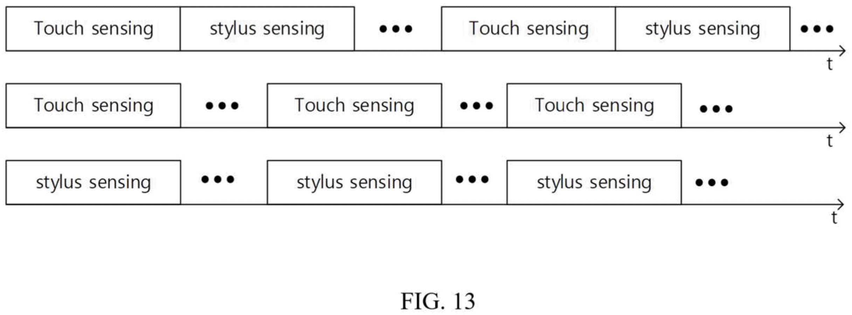

FIG. 13 is a diagram illustrating one method of controlling the sensor 1000 by the controllers 3000, 3000', 3000" illustrated in FIGS. 10 to 12, illustrating a time division control method.

Referring to FIG. 13, when a plurality of electrode patterns of the sensor 1000 illustrated in FIGS. 10 to 12 are configured on the same layer as a metal mesh, when the controllers 3000, 3000', 3000" illustrated in FIGS. 10 to 12 cause the sensor 1000 to perform a touch sensing operation, a stylus driving operation, and a stylus sensing operation, a distinction between these operations is required. For the distinction between these operations, specific operations may be defined for each time period by time-dividing in the controllers 3000, 3000', 3000". Alternatively, the controllers 3000, 3000', 3000" may control corresponding operations for each time period according to a predetermined operation scenario.

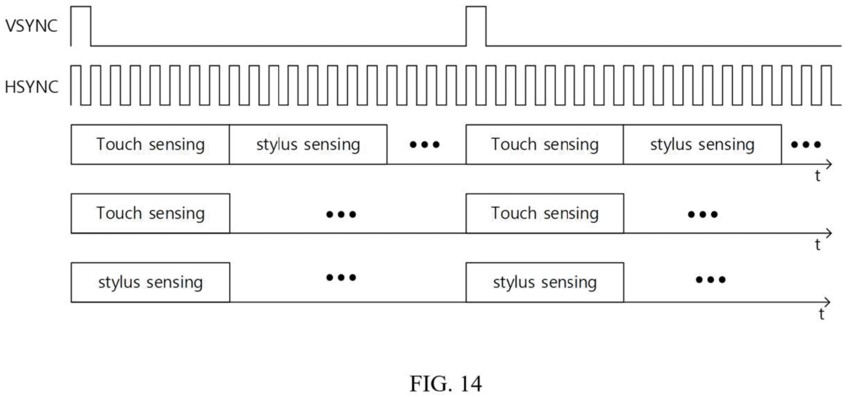

FIG. 14 is a diagram illustrating another method of controlling the sensor 1000 by the controllers 3000, 3000', 3000" illustrated in FIGS. 10 to 12, illustrating a control method synchronized with a display driving signal.

Referring to FIG. 14, the controllers 3000, 3000', 3000" illustrated in FIGS. 10 to 12 may receive display driving signals VSYNC, HSYNC from a display controller (not illustrated), and control the sensor 1000 to perform a touch sensing operation, a stylus driving operation, and a stylus sensing operation based on the provided display driving signals VSYNC, HSYNC. For example, the controllers 3000, 3000', 3000" may control the touch sensing operation, the stylus driving operation, and the stylus sensing operation to be performed in the sensor 1000 according to a preset operation scenario in synchronization with the display driving signals VSYNC, HSYNC.

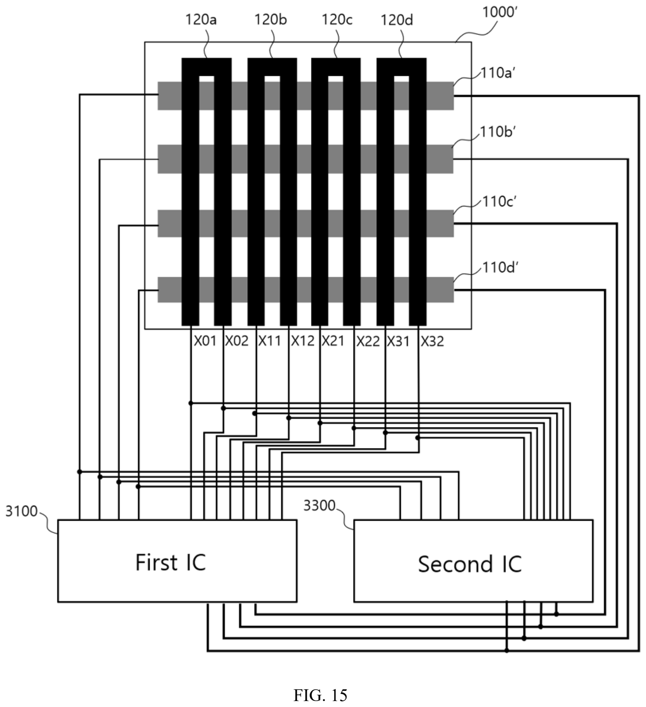

FIG. 15 is a diagram illustrating an electronic device comprising a sensor and a controller according to a fifth embodiment of the present disclosure.

The electronic device illustrated in FIG. 15 comprises a sensor 1000', a first controller 3100, and a second controller 3300.

The sensor 1000' may be a portion of the sensor 100", 100‴ʺʺ of FIG. 4 or 9, but the present disclosure is not limited thereto, and may be replaced with the sensor 100‴, 100ʺʺ, 100‴ʺ, 100‴‴ of FIGS. 5 to 8.

The sensor 1000' comprises a plurality of first electrode patterns 110a', 110b', 110c', 110d' and a plurality of second electrode patterns 120a, 120b, 120c, 120d. Each of the plurality of first electrode patterns 110a', 110b', 110c', 110d' has a shape extending along a first direction, and one end is respectively electrically connected to the first controller 3100 and the second controller 3300, and the other end is configured to be respectively electrically connected to the first controller 3100 and the second controller 3300. Here, the one end and the other end of each first electrode pattern 110a' are configured to be connected to different terminals of the first controller 3100 and the second controller 3300. Each of the plurality of second electrode patterns 120a, 120b, 120c, 120d has a shape extending along a second direction crossing the first direction. As mentioned in FIG. 4, each of the plurality of second electrode patterns 120a, 120b, 120c, 120d is configured such that at least a portion thereof has a U-shape, so that each second electrode pattern 120a, 120b, 120c, 120d may have both ends X01, X02 / X11, X12 / X21, X22 / X31, X32. Both ends X01, X02 / X11, X12 / X21, X22 / X31, X32 of each second electrode pattern 120a, 120b, 120c, 120d are configured to be electrically connected to the first controller 3100 and the second controller 3300.

The first controller 3100 and the second controller 3300 are each configured as a separate IC, and are disposed to be separated from each other. The first controller 3100 and the second controller 3300 may be configured to perform different functions from each other. For example, the first controller 3100 may be configured to perform a stylus driving and sensing function. The second controller 3300 may be configured to perform a touch sensing function.

The first controller 3100 is electrically connected to the plurality of electrode patterns 110a', 110b', 110c', 110d', 120a, 120b, 120c, 120d of the sensor 1000'. In addition, the second controller 3300 is configured to be electrically connected to the plurality of electrode patterns 110a', 110b', 110c', 110d', 120a, 120b, 120c, 120d of the sensor 1000'. An electrical connection between the first and second controllers 3100, 3300 and the plurality of electrode patterns 110a', 110b', 110c', 110d', 120a, 120b, 120c, 120d may be formed of a conductive wiring or a metal mesh.

The first controller 3100 and the second controller 3300 may be configured to control the sensor 1000' to perform various operations. The various operations may comprise a touch sensing operation, a stylus driving operation, and a stylus sensing operation.

In the operations to be described below, when the first controller 3100 controls the sensor 1000', the second controller 3300 may be electrically floating from the sensor 1000', and conversely, when the second controller 3300 controls the sensor 1000', the first controller 3100 may be electrically floating from the sensor 1000'. This control method is to prevent the first controller 3100 and the second controller 3300 from interfering with each other when controlling the sensor 1000'.

The touch sensing operation may comprise a first touch sensing operation and a second touch sensing operation different from each other. Here, the first touch sensing operation may be a mutual sensing operation, and the second touch sensing operation may be a self-sensing operation.

In the first touch sensing operation, the first controller 3100 controls the plurality of electrode patterns 110a', 110b', 110c', 110d', 120a, 120b, 120c, 120d to be electrically floating. The second controller 3300 is configured to control a mutual driving signal to be applied to the plurality of second electrode patterns 120a, 120b, 120c, 120d among the plurality of electrode patterns 110a', 110b', 110c', 110d', 120a, 120b, 120c, 120d, and receive a mutual sensing signal from the plurality of first electrode patterns 110a', 110b', 110c', 110d'. Conversely, the second controller 3300 may be configured to control the mutual driving signal to be applied to the plurality of first electrode patterns 110a', 110b', 110c', 110d', and receive the mutual sensing signal from the plurality of second electrode patterns 120a, 120b, 120c, 120d.

In the second touch sensing operation, the first controller 3100 controls the plurality of electrode patterns 110a', 110b', 110c', 110d', 120a, 120b, 120c, 120d to be electrically floating. The second controller 3300 may apply a self-driving signal to each of the plurality of electrode patterns 110a', 110b', 110c', 110d', 120a, 120b, 120c, 120d, and receive a self-sensing signal from the plurality of electrode patterns 110a', 110b', 110c', 110d', 120a, 120b, 120c, 120d to which the self-driving signal is applied.

In the stylus driving operation, the second controller 3300 controls the plurality of first electrode patterns 110a', 110b', 110c', 110d' to be electrically floating or grounded (GND). The first controller 3100 may set the plurality of first electrode patterns 110a', 110b', 110c', 110d to be electrically floating or grounded (GND), and control a predetermined current to flow in at least one of the plurality of second electrode patterns 120a, 120b, 120c, 120d. For example, the first controller 3100 may be configured to apply a pen driving signal to either one of one end X01 and the other end X02 of at least one second electrode pattern 120a, and electrically ground the other one or apply an anti-phase pen driving signal having an exactly opposite phase to the pen driving signal. Alternatively, the first controller 3100 may set the plurality of second electrode patterns 120a, 120b, 120c, 120d to be electrically floating or grounded (GND), and control a predetermined current to flow in at least one of the plurality of first electrode patterns 110a', 110b', 110c', 110d'. For example, the first controller 3100 may be configured to apply the pen driving signal to at least one first electrode pattern 110a', and electrically ground the other one or more first electrode patterns 110b' or apply the anti-phase pen driving signal having the exactly opposite phase to the pen driving signal.

In the stylus sensing operation, the second controller 3300 controls the plurality of first electrode patterns 110a', 110b', 110c', 110d' to be electrically floating. The first controller 3100 may be configured to receive a pen sensing signal from the plurality of first electrode patterns 110a', 110b', 110c', 110d' and the plurality of second electrode patterns 120a, 120b, 120c, 120d. Here, the pen sensing signal is a signal in which a magnetic field pen signal emitted from an external stylus pen is induced in the plurality of first electrode patterns 110a', 110b', 110c', 110d' and the plurality of second electrode patterns 120a, 120b, 120c, 120d, and the induced signal may be a current or voltage signal.

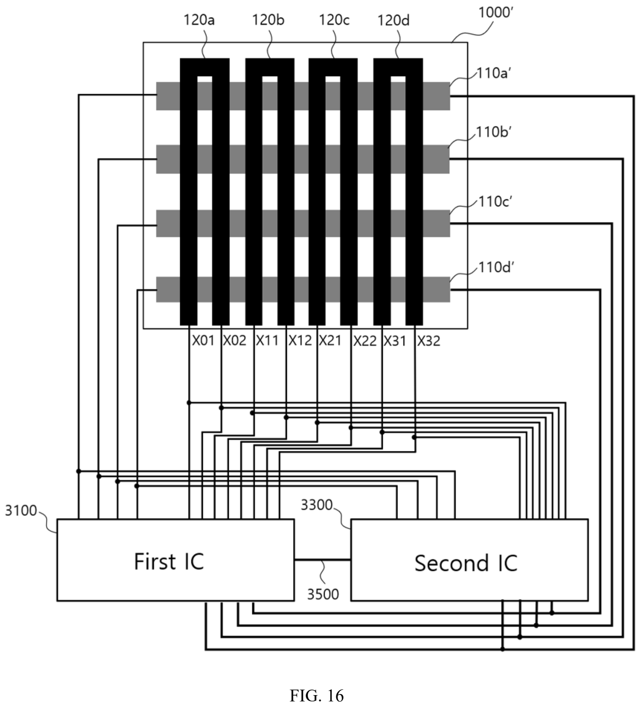

FIG. 16 is a diagram illustrating a modified embodiment of the electronic device illustrated in FIG. 15, comprising a signal transmitter 3500 for communication between controllers.

The electronic device of FIG. 16 further comprises the signal transmitter 3500 for signal transmission between a first controller 3100 and a second controller 330 compared to the electronic device of FIG. 15. The signal transmitter 3500 may be formed of predetermined component(s) such that various communication methods comprising GPIO, SPI, I2C, and I3C are implemented.

For example, when an external stylus pen is sensed, a sensing signal indicating that the stylus pen is sensed is transmitted from the first controller 3100 to a second controller 3300 through the signal transmitter 3500, and the second controller 3300 receiving the sensing signal may control a plurality of first electrode patterns 110a', 110b', 110c', 110d' and a plurality of second electrode patterns 120a, 120b, 120c, 120d to be electrically floating, or control a predetermined operation to be performed according to a preset operation scenario. Conversely, when an external touch is sensed, a sensing signal indicating that the touch is sensed is transmitted from the second controller 3300 to the first controller 3100 through the signal transmitter 3500, and the first controller 3100 receiving the sensing signal may control the plurality of first electrode patterns 110a', 110b', 110c', 110d' and the plurality of second electrode patterns 120a, 120b, 120c, 120d to be electrically floating, or control a predetermined operation to be performed according to a preset operation scenario.

Meanwhile, although not illustrated in a separate drawing, a separate host configured to respectively control the first controller 3100 and the second controller 3300 illustrated in FIG. 16 may be additionally provided.

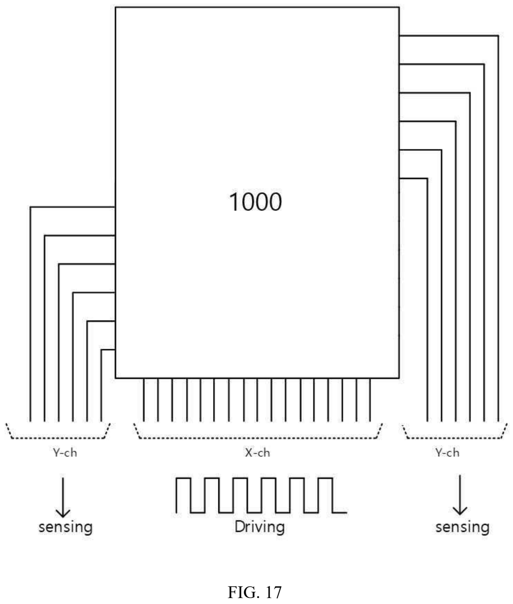

FIG. 17 is a diagram illustrating a mutual touch sensing control method in the sensor 1000 illustrated in FIGS. 10 to 12. The control method described below may be performed by a controller (not illustrated) configured to control the sensor 1000.

Referring to FIG. 17, the mutual sensing method may apply a mutual touch driving signal Driving in a form of a pulse or a sine wave to X channels X-ch of the sensor 1000, and receive a mutual touch sensing signal from Y channels Y-ch.

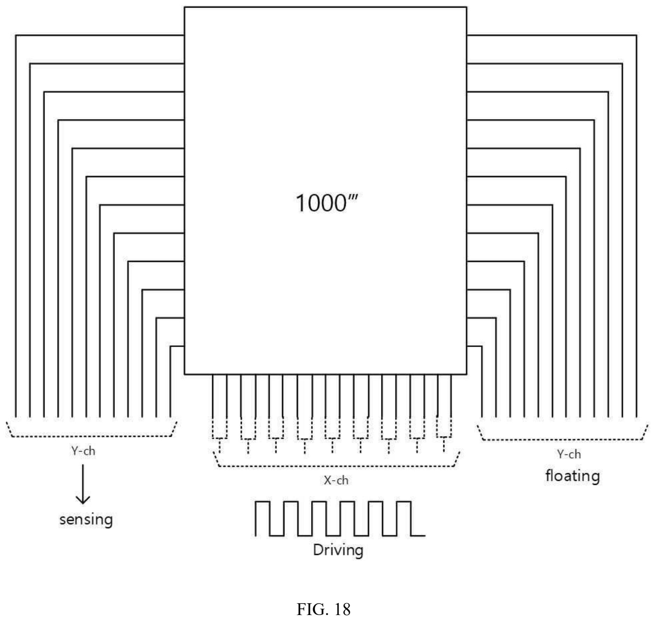

FIG. 18 is a diagram illustrating a mutual touch sensing control method in a sensor 1000‴ according to another embodiment of the present disclosure, illustrating a mutual touch sensing control method in a double routing structure (FIGS. 4 to 9).

Referring to FIG. 18, the sensor 1000‴ may be the sensor 100‴ʺʺ of FIG. 9. An X channel X-ch of the sensor 1000‴ may be electrically connected to the plurality of second electrode patterns 120a, 120b, 120c, 120d, 120e', 120f, 120g', 120h' of the sensor 100‴ʺʺ of FIG. 9, and a Y channel Y-ch of the sensor 1000‴ may be electrically connected to the plurality of first electrode patterns 110a', 110b', 110c', 110d' of the sensor 100‴ʺʺ of FIG. 9. Meanwhile, although not illustrated in a separate drawing, the sensor 1000‴ may be replaced with any one of the sensors of FIGS. 4 to 8.

The mutual sensing method of FIG. 18 may apply the mutual touch driving signal Driving in the form of a pulse or a sine wave to X channels X-ch of the sensor 1000"', receive the mutual touch sensing signal from Y channels disposed on one side with respect to the sensor 1000‴ among Y channels Y-ch, and electrically float other Y channels disposed on the other side with respect to the sensor 1000‴.

Here, when the X channels X-ch of the sensor 1000‴ are formed of the plurality of second electrode patterns 120a, 120b, 120c, 120d, 120e', 120f, 120g', 120h' of FIG. 9, the same mutual touch driving signal may be applied to both ends of each second electrode pattern 120a', or both ends of each second electrode pattern 120a' may be electrically connected to each other.

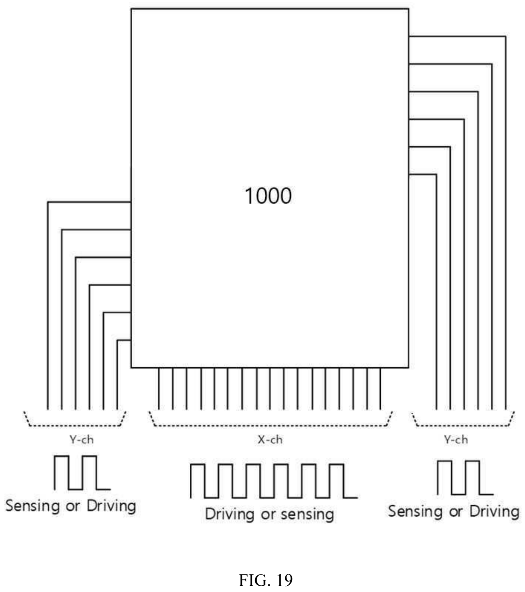

FIG. 19 is a diagram illustrating a self-touch sensing control method in the sensor 1000 illustrated in FIGS. 10 to 12.

Referring to FIG. 19, one self-sensing method may apply a self-touch driving signal Driving in a form of a pulse to X channels X-ch and Y channels Y-ch of the sensor 1000, and receive a self-touch sensing signal corresponding to a change in self-capacitance from the X channels X-ch and the Y channels Y-ch to which the self-touch driving signal is applied.

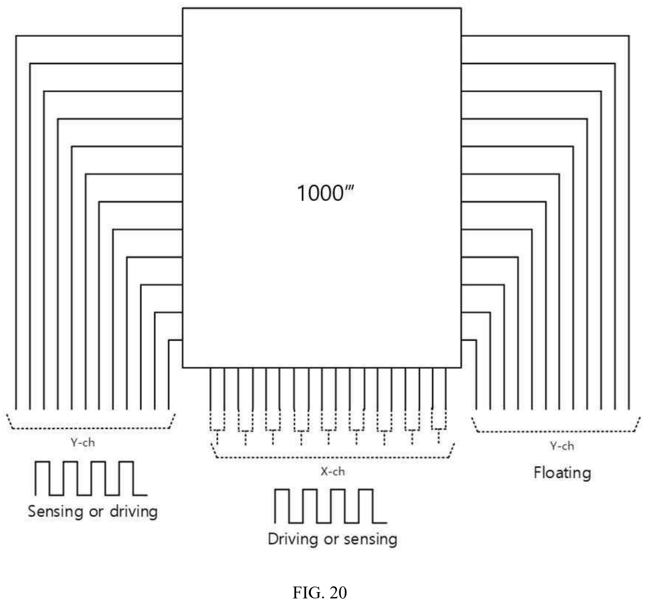

FIG. 20 is a diagram illustrating a self-touch sensing control method in the sensor 1000‴ illustrated in FIG. 18, illustrating a self-touch sensing control method in a double routing structure.

The self-sensing method of FIG. 20 may apply the self-touch driving signal Driving in the form of a pulse to X channels X-ch of the sensor 1000"', receive the self-touch sensing signal from the X channels X-ch to which the self-touch driving signal is applied, apply the self-touch driving signal to Y channels located on one side with respect to the sensor 1000‴ among Y channels Y-ch, and receive the self-touch sensing signal from the Y channels to which the self-touch driving signal is applied. Here, other Y channels located on the other side with respect to the sensor 1000‴ may be electrically floating.

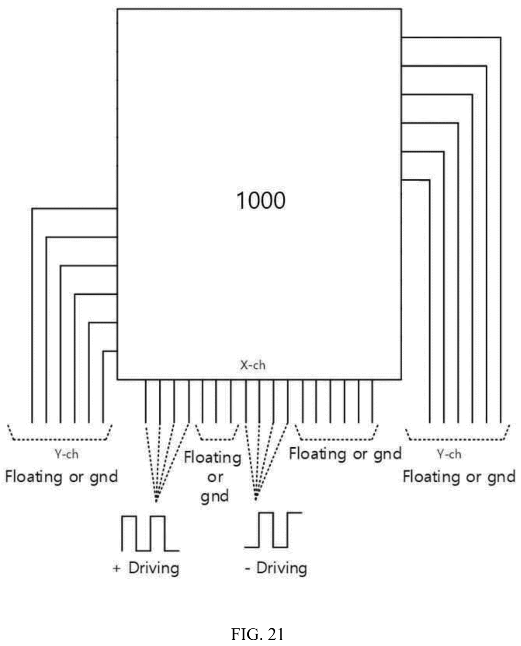

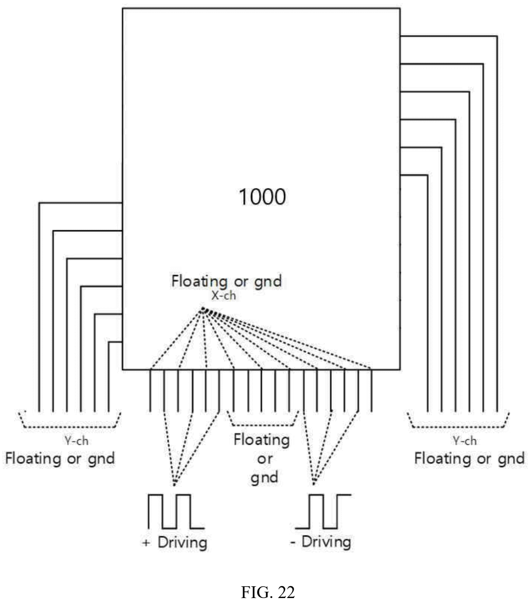

FIGS. 21 and 22 are diagrams illustrating stylus driving control methods in the sensor 1000 illustrated in FIGS. 10 to 12.

Referring to FIGS. 21 and 22, the stylus driving method applies a first stylus driving signal to some of X channels X-ch of the sensor 1000, and applies a second stylus driving signal to others of the X channels X-ch to allow a current to flow around the stylus pen. Here, the first stylus driving signal may be a pulse signal, and the second stylus driving signal may be an anti-phase signal of the pulse signal, or a reference voltage signal such as a constant voltage VCOM or a ground GND. Meanwhile, the rest of the X channels of the sensor 1000 to which the first and second stylus driving signals are not applied may be electrically floating or grounded, and Y channels of the sensor 1000 may also be electrically floating or grounded.

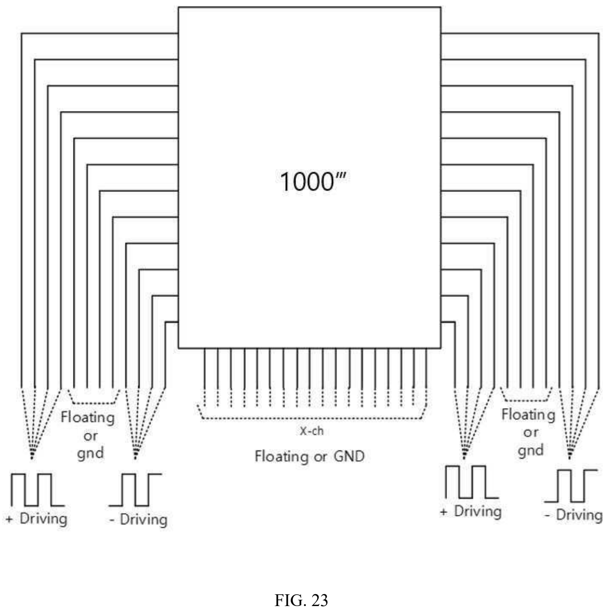

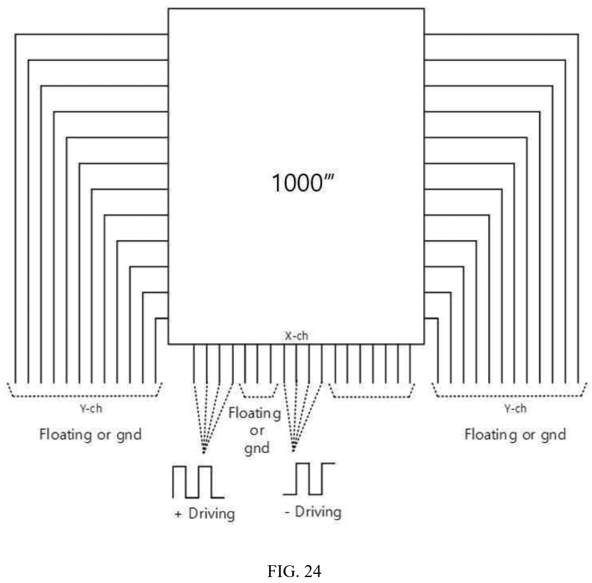

FIGS. 23 and 24 are diagrams illustrating stylus driving control methods in the sensor 1000‴ illustrated in FIG. 18, illustrating a stylus driving control method in a double routing structure.

Referring to FIG. 23, one stylus driving method electrically floats or grounds all X channels X-ch of the sensor 1000"', applies the first stylus driving signal to some of Y channels Y-ch, and applies the second stylus driving signal to others of the Y channels Y-ch to allow a current to flow around the stylus pen. Meanwhile, the rest of the Y channels Y-ch of the sensor 1000‴ to which the first and second stylus driving signals are not applied may be electrically floating or grounded.

Referring to FIG. 24, another stylus driving method electrically floats or grounds all Y channels Y-ch of the sensor 1000"', applies the first stylus driving signal to some of X channels X-ch, and applies the second stylus driving signal to others of the X channels X-ch to allow a current to flow around the stylus pen. Meanwhile, the rest of the X channels X-ch of the sensor 1000‴ to which the first and second stylus driving signals are not applied may be electrically floating or grounded.

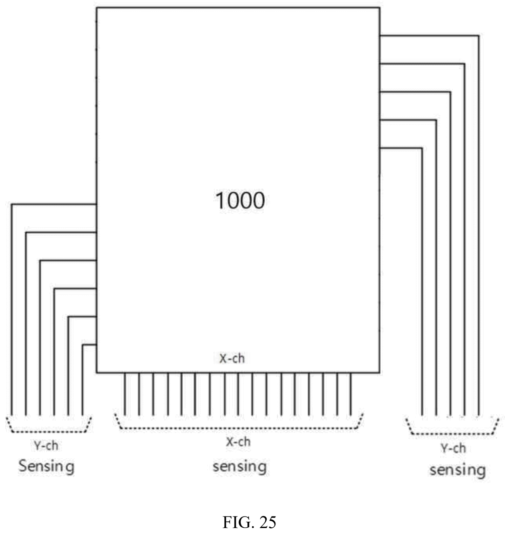

FIG. 25 is a diagram illustrating a stylus sensing control method in the sensor 1000 illustrated in FIGS. 10 to 12.

Referring to FIG. 25, the stylus sensing method may receive a stylus sensing signal from X channels X-ch and Y channels Y-ch of the sensor 1000. Based on the stylus sensing signals from the X channels X-ch, a location of the stylus pen on a horizontal axis may be detected, and based on the stylus sensing signals from the Y channels Y-ch, a location of the stylus pen on a vertical axis may be detected.

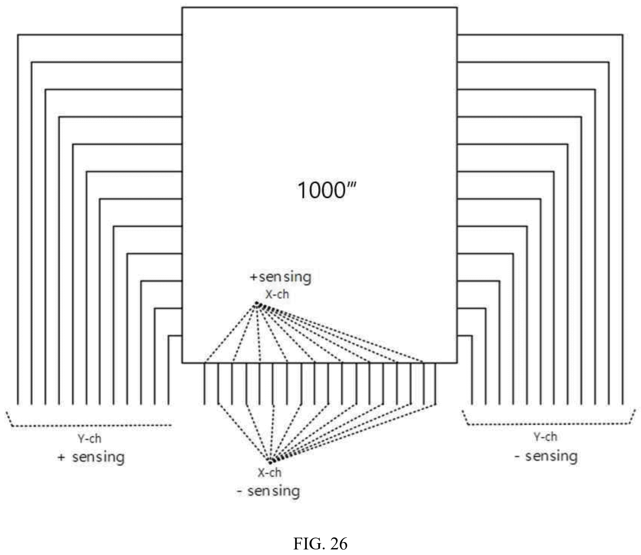

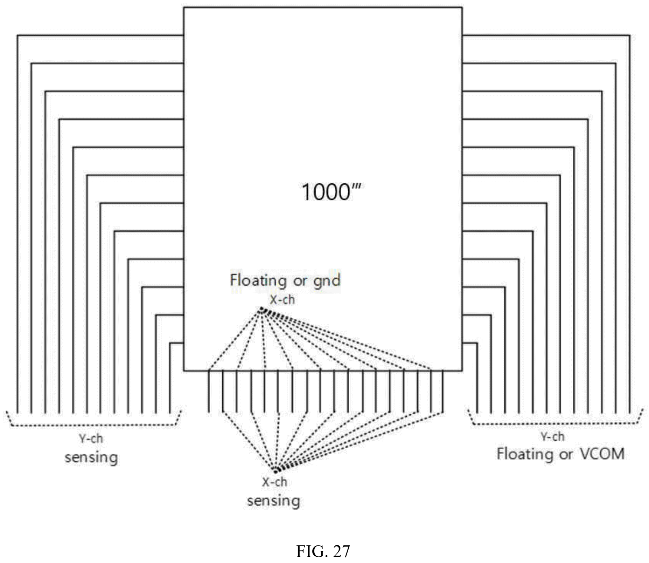

FIGS. 26 and 27 are diagrams illustrating stylus sensing control methods in the sensor 1000‴ illustrated in FIG. 18, illustrating a stylus sensing control method in a double routing structure.

Referring to FIG. 26, one stylus sensing method receives a differential sensing signal from X channels and Y channels. Specifically, a positive (+) stylus sensing signal is received from some of the X channels, and a negative (-) stylus sensing signal is received from others of the X channels. For example, the positive (+) stylus sensing signal may be received from one end of each U-shaped second electrode pattern 120a illustrated in FIG. 4, and the negative (-) stylus sensing signal may be received from the other end of each second electrode pattern 120a. Meanwhile, the positive (+) stylus sensing signal may be received from one side of the Y channels, and the negative (-) stylus sensing signal may be received from the other side.

Referring to FIG. 27, another stylus sensing method receives the stylus sensing signal from some of the X channels, and electrically floats or grounds others of the X channels. For example, the stylus sensing signal may be received from one end of each U-shaped second electrode pattern 120a illustrated in FIG. 4, and the other end of each second electrode pattern 120a may be electrically floating or grounded. Meanwhile, the stylus sensing signal may be received from one side of the Y channels, and the other side may be electrically floating or grounded, or a constant voltage VCOM may be applied thereto.

In FIGS. 25 to 27, when the number of stylus sensing channels among the X and Y channels is relatively greater than the number of receivers in a controller (not illustrated), the controller (not illustrated) may perform sensing for each channel region by using a multiplexer MUX. In this case, a non-sensing sensing channel may be grounded (or applied with the constant voltage VCOM) or floating.

## Claims

1. An electronic device, comprising:
a sensor comprising a plurality of first electrode patterns extending in a first direction and a plurality of second electrode patterns extending in a second direction crossing the first direction; and
a controller electrically connected to the sensor, and configured to control a touch sensing operation of sensing a touch of an object through the sensor, and a stylus driving operation for driving a stylus pen and/or a stylus sensing operation for sensing the stylus pen,
**characterized in that** each of the second electrode patterns has an open-loop shape in which one side of a closed loop is opened, and both ends of each second electrode pattern are configured to be respectively electrically connected to different terminals of the controller, wherein the electronic device satisfies any one of the following conditions: (a) both ends of all of the plurality of second electrode patterns are disposed to face the same direction; or (b) both ends of each of the first electrode patterns are configured to be respectively electrically connected to different terminals of the controller, and both ends of some second electrode patterns among the plurality of second electrode patterns are disposed to face the same direction.

2. The electronic device according to claim 1, wherein, when condition (a) is satisfied, one end of each of the plurality of first electrode patterns is electrically connected to the controller, and the other end thereof is electrically floating, and when condition (b) is satisfied, both ends of remaining second electrode patterns among the plurality of second electrode patterns are disposed to face a direction opposite to a direction in which the both ends of the some second electrode patterns face, and optionally, the some second electrode patterns and the remaining second electrode patterns are alternately disposed one by one along the first direction.

3. The electronic device according to claim 2, wherein, when condition (b) is satisfied, one end of each of the plurality of first electrode patterns is electrically connected to a different terminal of the controller, and wirings connected to the other ends of some first electrode patterns among the plurality of first electrode patterns and wirings connected to the other ends of remaining first electrode patterns are configured to be routed in opposite directions.

4. The electronic device according to any one of the preceding claims, wherein the plurality of first electrode patterns and the plurality of second electrode patterns are formed of a metal mesh material, and are disposed on the same layer using a bridge or respectively disposed on different layers.

5. The electronic device according to any one of the preceding claims, further comprising: a cover layer disposed on the sensor; a display panel disposed under the sensor; and a magnetic field shielding layer disposed under the display panel.

6. The electronic device according to any one of the preceding claims, wherein the stylus pen is an electro-magnetic resonance (EMR) type.

7. The electronic device according to any one of the preceding claims, wherein the controller is configured as a single IC in which a circuit configured to perform the touch sensing operation and a circuit configured to perform the stylus driving/sensing operation are integrated into one die or respectively integrated into different dies; or the controller comprises a first controller configured to perform the touch sensing operation, and a second controller configured to perform the stylus driving/sensing operation, wherein the first controller and the second controller are configured as separate chips physically separated from each other, and optionally further comprises a signal transmitter for signal transmission between the first controller and the second controller, wherein the signal transmitter is configured to perform general purpose input/output (GPIO) or I2C communication.

8. The electronic device according to any one of the preceding claims, wherein the controller is configured to perform the touch sensing operation in a first time period and perform the stylus driving/sensing operation in a second time period through a time division method, and divide the second time period again to respectively perform the stylus driving operation and the stylus sensing operation, and optionally, the controller is configured to perform the operations according to the time-divided periods in synchronization with a vertical synchronization signal (VSYNC) or a horizontal synchronization signal (HSYNC) which is a display driving signal.

9. The electronic device according to any one of the preceding claims, wherein the controller is configured to, during the stylus driving operation, apply a driving signal to one end of at least one of the plurality of first electrode patterns and apply an anti-phase signal or a ground signal to the other end to form a loop current in the at least one of the plurality of first electrode patterns.

10. The electronic device according to any one of the preceding claims, wherein the controller is configured to, during the stylus driving operation, apply a first driving signal to one end of at least one second electrode pattern among the plurality of second electrode patterns, apply an anti-phase signal of the first driving signal to or ground the other end, and electrically float or ground remaining second electrode patterns.

11. The electronic device according to any one of the preceding claims, wherein the controller is configured to, during a mutual touch sensing operation using the plurality of first electrode patterns, receive a touch sensing signal only through one end of both ends of each first electrode pattern among the plurality of first electrode patterns, and electrically float the other end.

12. The electronic device according to any one of the preceding claims, wherein the controller is configured to perform a mutual touch sensing operation of applying a driving signal to at least one second electrode pattern among the plurality of second electrode patterns and receiving a sensing signal from at least one first electrode pattern among the plurality of first electrode patterns as the touch sensing operation, and electrically ground or float a second electrode pattern to which the driving signal is not applied and a first electrode pattern from which the sensing signal is not received during the mutual touch sensing operation.

13. The electronic device according to any one of the preceding claims, wherein the controller is configured to, during the stylus sensing operation, perform an operation of detecting a location of the stylus pen by differentially processing a positive (+) stylus sensing signal from one end of at least one second electrode pattern among the plurality of second electrode patterns and a negative (-) stylus sensing signal from the other end.

14. The electronic device according to any one of claims 1 to 12, wherein the controller is configured to, during the stylus sensing operation, receive a stylus sensing signal from one end of at least one second electrode pattern among the plurality of second electrode patterns, and electrically float, apply a constant voltage (VCOM) to, or ground the other end.

15. The electronic device according to any one of the preceding claims, wherein the controller is configured to, during the stylus sensing operation, when a number of channels of the first electrode patterns or the second electrode patterns is greater than a number of receivers of the controller, perform sensing by dividing into channel regions using a multiplexer (MUX), and ground, apply a constant voltage (VCOM) to, or float a non-sensing channel.
